(19) Europäisches Patentamt
European Patent Office
Office européen des brevets

(11) EP 4 656 671 A1

(12) EUROPEAN PATENT APPLICATION

(43) Date of publication:
**03.12.2025 Bulletin 2025/49**

(21) Application number: **24178465.1**

(22) Date of filing: **28.05.2024**

(51) International Patent Classification (IPC):
***C08G 77/14** (2006.01)* ***C08G 77/26** (2006.01)*
***C08G 77/28** (2006.01)*

(52) Cooperative Patent Classification (CPC):
**C08G 77/26; C08G 77/14; C08G 77/28**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Siloxene AG**
**8306 Brüttisellen (CH)**

(72) Inventors:
- **NEMEC, Marek**
  **05801 Poprad (SK)**
- **SIVARAMAN, Deeptanshu**
  **8600 Dübendorf (CH)**
- **KOEBEL, Matthias**
  **8306 Brüttisellen (CH)**

(74) Representative: **Troesch Scheidegger Werner AG**
**Schwäntenmos 14**
**8126 Zumikon (CH)**

# (54) Q-T-SILOXANE-BASED POLYMERIC COMPOSITIONS WITH AMINOPHENYL, ISOCYANATE OR EPOXIDE FUNCTIONALITY, AND METHOD FOR PREPARING SAME

(57) Functionalized polymeric liquid polysiloxane material compositions comprising non-organofunctional Q-type siloxane moieties and mono-organofunctional T-type siloxane moieties, wherein the composition comprises aminophenyl, isocyanate and/or epoxide functionalities, methods for producing the polymeric liquid polysiloxane material and associated uses and formulations of the material.

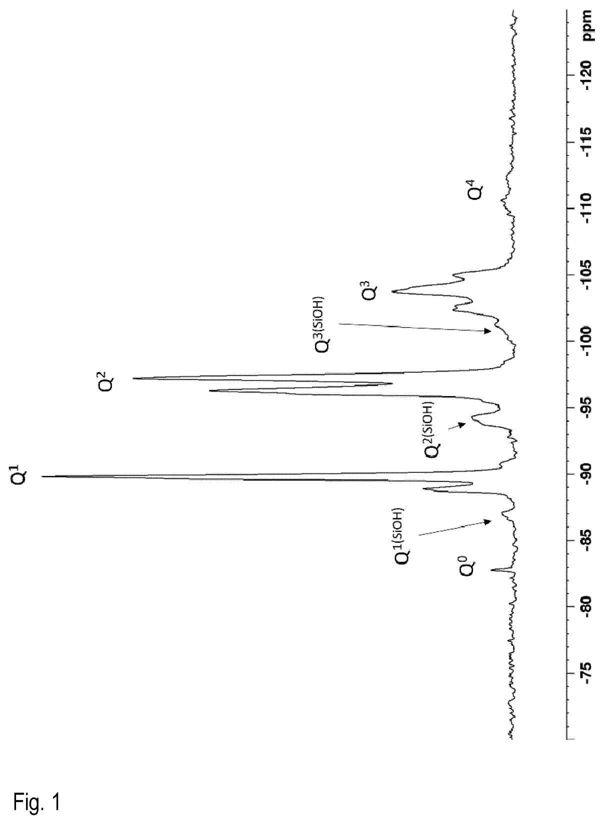


Fig. 1

EP 4 656 671 A1

## Description

The present invention pertains to functionalized polymeric liquid polysiloxane material compositions comprising non-organofunctional Q-type siloxane moieties and mono-organofunctional T-type siloxane moieties, wherein the composition comprises aminophenyl T-type siloxane moieties, isocyanate functionalities and/or epoxide functionalities. The present invention further pertains to methods for producing the polymeric liquid polysiloxane material as well as associated uses and formulations of the material.

WO 2019/234062 A1 discloses a process for manufacturing a core-shell PEOS-core with an organofunctional silane shell material. WO 2019/234062 A1 describes the preparation of a hyperbranched ethylsilicate "core" by means of non-hydrolytic acetic anhydride condensation chemistry and then the grafting of a shell, made preferentially from a selection of organofunctional T-type trialkoxysilanes in a second temporally separated step to create a hybrid organofunctional core-shell molecular building block. Both steps are preferably carried out in the presence of a tetraalkoxytitanate rearrangement catalyst.

WO 2022/058059 describes hyperbranched polyalkoxysiloxane materials comprising Q- and M-, D- and/or T-type functionality within the same macromolecule.

It is the objective of the present invention to provide improved, optionally more stable, and functionalized organofunctional hyperbranched polyalkoxysiloxane material compositions comprising Q- and T-siloxane moieties, methods for producing the same and various applications thereof.

The above problem is solved by the polymeric liquid polysiloxane material according to claim 1.

In a first aspect, the present invention is directed to a composition comprising a polymeric liquid polysiloxane material comprising or consisting of:

(i) non-organofunctional Q-type siloxane moieties selected from the group consisting of:

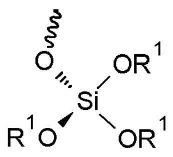 , 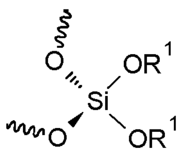 , 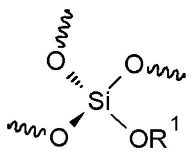 and 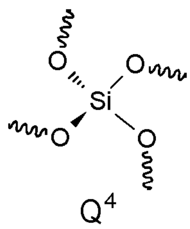 ;

$Q^1$ $Q^2$ $Q^3$ $Q^4$

(ii) mono-organofunctional T-type siloxane moieties selected from the group consisting of:

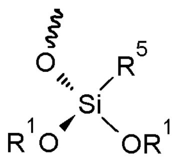 , 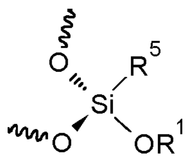 and 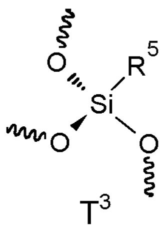 ;

$T^1$ $T^2$ $T^3$

wherein

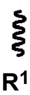 indicates a covalent siloxane bond to a silicon atom of another Q- and/or T-type moiety as defined in (i) and (ii);

**$R^1$** is selected from the group consisting of methyl, ethyl and propyl;

**$R^5$** is **L-Z,** wherein

**L** is an aliphatic linker with the formula $-(CH_2)_a-$;

**Z** is selected from the group consisting of **$-SR^6$**, **$-NHR^6$**, **$N(R^6)_2$** and **$-NR^6R^7$**, optionally **$-SR^6$**, **$-NHR^6$**, and **$-NR^6R^7$**,

moiety (I):

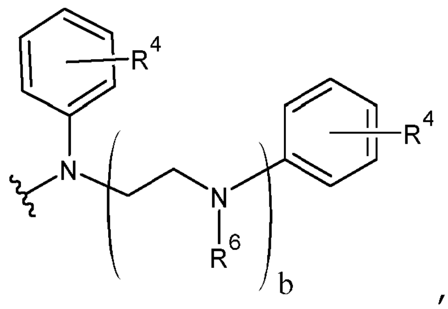,

moiety (II): and

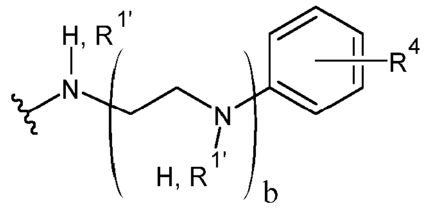,

wherein $R^4$ is H if b is 0,

moiety (III):

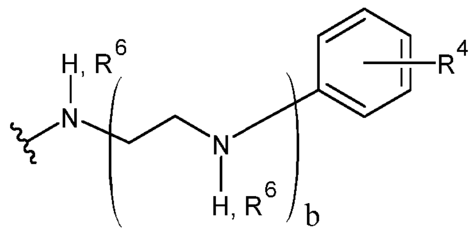,

wherein moiety (III) comprises least one $R^6$ residue;

wherein

**a** is an integer selected from the group consisting of 1, 2, 3, 4, 5, 6, 7 and 8,

**b** is an integer selected from the group consisting of 0, 1 and 2,

**$R^{1'}$** is selected from the group consisting of methyl, ethyl, propyl, butyl, pentyl and hexyl;

**$R^4$** is a residue selected from the group consisting of -H, methyl, ethyl, $-CH=CH_2$, -F, -Cl, -Br, -I, -CN, -SCN, $-N_3$, $-NO_2$, $-SO_2OH$, - $SO_2OR^{1'}$ and $-C(=O)R^{1'}$, and

**$R^6$** is selected from the group consisting of:

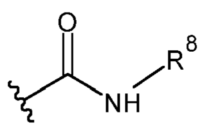, 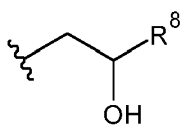, and 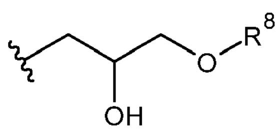;

**$R^7$** is selected from the group consisting of Me and $-(CH_2)_a-CH_3$;

**$R^8$** is

- an aliphatic, aromatic or unsaturated, substituted or non-substituted $C_{4-20}$ hydrocarbon, optionally a methylene diphenyl, optionally an isocyanate-terminated and/or a glycidoxy-terminated aliphatic, aromatic or unsaturated, substituted or non-substituted $C_{4-20}$ hydrocarbon, and/or
- an aliphatic, aromatic or unsaturated, substituted or non-substituted residue selected from the group consisting of β-hydroxy ethers, β-hydroxy thioethers, β-hydroxy amines, oxazolidones, ureas, cyanurates, thio-ureas, urethanes and combinations thereof in polymeric or oligomeric form having a mass-average molecular weight of 100 to 20'000 g/mol, 150 to 15'000 g/mol, or 170 to 10'000 g/mol,
  wherein $R^8$ comprises at least one moiety selected from the group consisting of an isocyanate and an epoxide,

wherein

the degree of polymerization of the T-type alkoxy-terminated siloxane moieties of the material $DP_{T\text{-type}}$ is in the range of 1.1 to 2.7;

the degree of polymerization of the Q-type alkoxy-terminated moieties of the material $DP_{Q\text{-type}}$ is in the range of 1.4 to 2.8;

the material and/or the composition optionally has a viscosity in the range of 100 mPas, 300 mPas or 500 mPas to 30'000 mPas, 50'000 mPas or 100'000 mPas; and

the material optionally comprises less than 5 mol-%, 2 mol-% or 0.5 mol-% silanol groups (Si-OH);

if the composition, or optionally the material, comprises isocyanate groups, the molar ratio of all $R^5$ residues to all isocyanate groups in the composition, or optionally in the material, is 1 to at least 5, optionally 1 to at least 6;

if the composition, or optionally the material, comprises epoxide groups, the molar ratio of all $R^5$ residues to all epoxide groups in the composition, or optionally in the material, is 1 to at least 10, optionally 1 to at least 17, optionally 1 to at least 25;

optionally the composition comprises less than 30 weight-%, less than 25 weight-% or less than 20 weight-% polyols that are not covalently bound to the polymeric liquid polysiloxane material relative to the total weight of the composition.

Optionally, the polymeric liquid polysiloxane material of the composition described herein further comprises:

(iii) tri-organofunctional M-type siloxane moieties selected from the group consisting of:

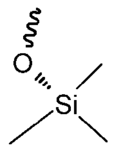
,

and/or

(iv) di-organofunctional D-type siloxane moieties selected from the group consisting of:

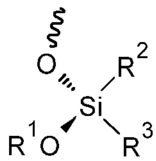
and
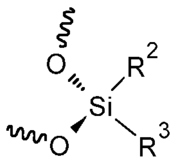
,

$D^1$ $D^2$

wherein

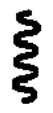 at Si-O indicates a covalent siloxane bond to a silicon atom of another Q-, T-, M- and/or D-type moiety as defined in (i) and (ii), (iii) and/or (iv);

**$R^2$** is selected from methyl, vinyl and phenyl; and

**$R^3$** is selected from methyl, vinyl and phenyl; wherein

the degree of polymerization of the D-type alkoxy-terminated siloxane moieties in the material $DP_{D\text{-}type}$ is in the range of 1.0 to 1.9;

the degree of polymerization of the D-type alkoxy-terminated siloxane moieties in the material $DP_{D\text{-}type}$ is in the range of 1.0 to 1.9;

the total content of tri-organofunctional M-type siloxane moieties in the polysiloxane material does not exceed 20 mol-%, optionally does not exceed 10 mol-% optionally does not exceed 5 mol-%; and

the total content of di-organofunctional D-type siloxane moieties in the polysiloxane material does not exceed 5 mol-%, 10 mol-%, or 15 mol-%.

As used herein and if not specifically stated otherwise, the term "material" refers to the polymeric liquid polysiloxane material, and the term "composition" refers to a composition that comprises the polymeric liquid polysiloxane material and optionally further components such as for example epoxy or isocyanate resins.

For example, the polymeric liquid polysiloxane material described herein for all aspects can be of a core-shell structure, wherein the core is composed of a majority of Q-type moieties and has a different composition than the shell, which is composed primarily of T-type moieties, and optionally further comprises M- and D-type moieties. Herein, the core is also referred to as the "precursor (material)". Alternatively, the polymeric liquid material can also comprise a "core-only" material, meaning that there is no shell and that Q- and T-type moieties are essentially randomly distributed within said core. The term "core-shell", as used herein, is commonly understood in the art (see, e.g., Nanoscale, 2010, 2, 829-843 or Nanoscale, 2011, 3, 5120-5125). Concerning core-shell products, the interface between core and shell must be understood as a diffuse shell rather than a sharp boundary at which composition changes abruptly. This diffuse shell layer architecture, where the concentration of the functional shell species varies over a few bond lengths or Angströms, is a direct result of the condensation chemistry, that is, the grafting of a functional silane shell onto a preformed polysiloxane core. Because the outer arms of the dendritic polysiloxane core are highly permeable to smaller silane monomers and oligomers, it is clear that the extent of grafting of the shell is highest on the periphery but there is no sharp cutoff. Nevertheless, the term core-shell still applies as grafting in the center of the core is highly hindered for both, steric reasons and reduced availability of reactive alkoxy groups, because the average connectivity (number of bridging oxygen linkages (Si-O-Si bonds) per silicon center) in the center of the core is higher than at the core perimeter. Consequently, the term core-shell will be used in the context of polymeric liquid materials in the sense of a polysiloxane core with a diffuse shell as described herein. Reference is also made to WO 2022/058059, incorporated by references in its entirety, for figures illustrating the core-shell structure of the polysiloxane material (see in particular Fig. 1).

For example, a typical material or composition according to the present invention may also comprise Q-, T-, D- and/or M-type silane monomers ($Q^0$, $T^0$, $D^0$, $M^0$), e.g. in smaller molar quantities compared to the $Q^n$, $T^n$, $D^n$ and $M^n$, with $n \geq 1$, moieties, in other words, the total molar siloxane content must be higher than the total molar silane monomer content, excluding HMDSO which may be present in any amounts, also as a monomer, e.g. also as a solvent or co-solvent. Similarly, the material or composition may optionally contain substantial fractions of smaller oligomers, for example a mixture of oligomers that spans a range from, e.g. dimer to pentamer polysiloxanes, optionally also featuring mixed Q-T and optionally Q-D bonding modes.

The material of the present invention optionally comprises less than 5 mol-%, 2 mol-% or 0.5 mol-% silanol groups (Si-OH), this means that the $OR^1$ moieties of Q-, T- or D-type silanes are -OH groups to this extent.

It was found that the material described herein can be prepared, e.g. by using a rearrangement catalyst as described herein, without the need for any active condensation reagents such as acetic anhydride and that M-, D- and/or T-type silanes react with the Q-type precursor or core material in a nucleophilic substitution/condensation ("rearrangement") reaction. It was also found that the aminophenyl substituents considerably reduce the kinetics of the alcohol siloxane condensation reaction of the QT polysiloxane polymeric liquid materials compared to other amino-functional QT polysiloxanes. This means that such aminophenyl substituted QT polysiloxanes have improved stability and reduced sensitivity to moisture during storage / handling either neat or in a formulation. It was further surprisingly found that aminophenyl substituent containing QT polysiloxanes can be converted into neat / solvent-free reactive blends and compositions containing isocyanates, which in turn simplifies handling and commercial viability of such compositions because they can be handled, transported and stored with significantly less effort and allow for the preparation of solvent-free product formulations such adhesives, coatings etc.

It was further surprisingly found that for a composition according to the present invention comprising isocyanate and/or epoxide functionalities, the ratio between amine- or sulfur-bearing residues (i.e. $R^5$) and the isocyanate and/or epoxide groups of the composition correlates with the stability, e.g. the shelf-life, of the composition. In other words, by controlling the ratio between the $R^5$ residues and the total number of isocyanate and/or epoxide groups in the composition, the shelf-life can be extended. Therefore, this ratio is defined in the present compositions as follows:

if the composition comprises isocyanate groups, the molar ratio of all $R^5$ residues to all isocyanate groups in the composition is 1 to at least 5, optionally 1 to at least 6;

if the composition comprises epoxide groups, the molar ratio of all $R^5$ residues to all epoxide groups in the composition is 1 to at least 10, optionally 1 to at least 17, optionally 1 to at least 25;

The features that "the composition comprises isocyanate/epoxide groups" and "all isocyanate/epoxide groups" and the corresponding molar ratios refer to any isocyanate and epoxide groups present in the composition, including isocyanate/epoxide groups on residues bound to a siloxane moiety and isocyanate/epoxide groups on molecules not bound to siloxane moieties but present in the composition. In other words, the ratio is defined as the ratio of the number of all $R^5$ residues to the number of all isocyanate/epoxide groups (bound and not bound to a residue bound to a siloxane moiety) present in the composition.

In an example, the composition of the present invention is one, wherein if the composition comprises both epoxide and isocyanate groups, in particular if the polymeric liquid polysiloxane material of the composition comprises $R^5$ residues with both epoxide and isocyanate groups (either in the same $R^5$ residue or in different $R^5$ residues), then the above-defined molar ratios of all $R^5$ residues to all isocyanate groups and epoxide groups do not apply, i.e. any ratio of $R^5$ residues to all isocyanate groups and epoxide groups is encompassed for the composition and/or the polymeric liquid polysiloxane material in this exemplary case.

It is noted that as used herein, the term epoxide (group/moiety) encompasses gylcidoxy groups, unless specifically stated otherwise.

For example, the composition according to the present invention can be essentially solvent-free, in particular free from organic solvents, and/or free of plasticizers. Essentially free means that less than 5, 3 or 1 weight% of the composition is a solvent and/or plasticizer (if both are present, the sum of is relevant).

The mole number and corresponding ratios of $R^5$ residues and isocyanate/epoxide groups can be, for example, determined by means of the following methodology:

The number of NCO groups in a composition according to the present invention can be determined by titration according to DIN EN ISO 14896. The Isocyanate reacts in toluene with an excess of di-n-butylamine to form a urea. Unreacted (excess) amine is determined by back titration with hydrochloric acid. NCO amount per kg is the calculated as:

$$NCO/kg = \frac{n(NCO)}{m(composition)}$$

n(NCO) is the molar amount of NCO groups and m(composition) is the mass of the composition under analysis. Similarly, the number of epoxy groups in a composition of the present invention can be determined by titration according to DIN EN ISO 3001 or ASTM D1652. The material under investigation or the composition is dissolved in an organic solvent (e.g. chloroform or methylene chloride). Afterwards, tetraethylammonium bromide (TEABr) reaction solution and glacial acetic acid are added, followed by the titration of the sample with standardized perchloric acid until the equivalence point is reached.

$$Epoxy/kg = \frac{n(epoxy)}{m(composition)}$$

n(epoxy) is the molar amount of epoxy groups and m(composition) is the mass of the composition under analysis. The total molar $R^5$ content can be determined by using $^{29}Si$ NMR with an internal standard. A known amount of an internal standard (IS) for example TMS or HMDSO, which has a well-defined chemical shift, is added to an NMR tube together with a known amount of a polysiloxane specimen.

Additionally, a relaxation agent (0.1 M chromium(III) acetylacetonate in deuterochloroform) is added into the NMR tube. Afterwards, a $^{29}Si$ NMR spectrum is recorded.

The $^{29}Si$ NMR spectrum is processed using a background correction to get rid of the broad background signal originating from the NMR tube and the probe and possible solid silicate signals (e.g. filler). Quantification of the $^{29}Si$ NMR

peak areas is carried out by integration of the individual signals. Assuming that the QT polysiloxane contains only $R^5$ substituents, the molar amount of $R^5$ groups per kilogram of pure QT-polysiloxane is then calculated according to:

$$\frac{n(R5)}{kg} = \frac{\frac{A(T)}{A(IS)} * \frac{m(IS)}{M(IS)}}{\frac{m(QT_PS)}{1000}}$$

where *n($R^5$)/kg* represents the molar amount of $R^5$ groups per 1 kg of the polysiloxane sample, A(T) is the summed peak area of all T-type peak areas of the material or composition, *A(IS)* is the peak area of the used internal standard, *m(IS)* is the mass of the used internal standard, *M(IS)* is the molar mass of the internal standard and *m(QT_PS)* is the mass of the polysiloxane sample used for this NMR experiment.

The internal standard is chosen from a group of materials that does not contain any Si NMR signals in the chemical shift region typical for the Q-type and T-type species or D-type (if present as R5) species of the polysiloxane (appearing in the spectral range between -30ppm and -120ppm), ensuring the chemical shift of the selected internal standard does not overlap with the signals of interest. Since each T-type Si atom contains exactly one $R^5$ group, the molar amount of $R^5$ groups can be calculated based on the total number of T-type Si atoms in the polysiloxane sample.

Additional analytical techniques such as GC or HPLC could be used to differentiate and quantify $R^5$ or blends of R5 from each other and from other non-$R^5$ (T-type and/or D-type silane substituents which do not fall under the $R^5$ definition) substituents, respectively, if needed. In this way, the percentage of individual $R^5$ substituents of the total T signal can be evaluated and the n($R^5$) number corrected on a percentage basis, accordingly.

The mol-% numbers for the total content of siloxane moieties described herein are defined by the sum of all D-, M- or T-type silicon atoms divided by the sum of all silicon atoms in the material, e.g. as measured by means of quantitative $^{29}$Si-NMR.

The mol-% numbers for the silanol groups (Si-OH) are defined by the ratio of silanol SiOH to total amount of silicon species, e.g. as measured by means of quantitative NMR spectroscopy. This can be done for example by measuring a $^{29}$Si-NMR spectrum and quantifying the $Q^1$ silanol-peak area($Q^1_{SiOH}$) and dividing it by the total $Q^1$ peak area in the $^{29}$Si-NMR spectrum. Model $^{29}$Si-NMR spectra illustrating the Si-OH signatures (side peaks) of the Q1, Q2 and Q3 speciation subsets are shown in Figure 1.

If not specifically stated otherwise, all molecular weights or molecular masses disclosed herein for oligomeric or polymeric compounds refer to the mass-average molecular weight, e.g. in the context of $R^8$, which can be determined by known standard means in the art., e.g. by chromatographic (gel permeation chromatography GPC) and/or static light scattering, small angle neutron scattering, X-ray scattering or high-resolution mass spectrometry methods. In certain instances, it may also be advantageous to characterize e.g. the $R^8$ substituent (purely organic) molecular weight information independently from the QT-polysiloxane hybrid polymer by first carrying out a (chromatographic) pre-separation of free isocyanate / epoxy containing polymers from the $R^8$-bound hybrid polymer and then analyzing the two fractions independently according to standard methodologies in analytical chemistry for analyzing mixtures of polymeric resins.

If a material exhibits M-type moieties, this generally leads to an increase in $DP_{Qtype}$. Therefore, the limit of $DP_{Qtype}$ in all materials disclosed herein is to be raised by 0.05 or optionally 0.1 DP units if the amount of M-type modification exceeds 5 mol-% or optionally 10 mol-%.

The chemical composition of $R^5$ can be identified and quantified by known spectroscopic means, e.g. by nuclear magnetic resonance spectroscopy, e.g. by $^1$H-, $^{13}$C-, and optionally $^{15}$N or $^{33}$S or $^{31}$P - NMR, optionally with isotope enrichment for analytical verification of these functionalization reactions.

The skilled person is aware that any combination of residues or moieties disclosed herein for forming $R^5$ must lead to a stable compound, i.e., a compound that can be isolated and characterized using conventional means. The skilled person can determine from his common general knowledge which compound, i.e. combination of the residues or moieties is not stable enough for characterization and isolation and specifically which linker chemistries are possible and do not interfere with other chemical functionalities in the polymeric liquid material. Any combination of moieties or residues that would result in a not stable compound, i.e. a compound that cannot be isolated and characterized, is excluded from the scope of the claims.

The degree of polymerization DP for any non-crystalline silicon oxide material (for the polysiloxane material and for the corresponding methods and uses described herein) is defined here as the ratio of bridging oxygens BO (# of Si-O-Si bonds) to the total number of metalloid atoms $Si_{tot}$ in the system. $^{29}$Si NMR spectra functional polysiloxane materials comprising three different types of grafted T-type aminosilane moieties are shown in Figures 2, 3 and 4, respectively. From the spectra, the different key benchmark figures (DP, Q:T molar ratio) can be determined for example according to the protocol given here.

The term "alkoxy-terminated" for the Q-, T- and D-type siloxane moieties is understood to refer to the residual substituents of said moieties which are essentially alkoxy groups, because the polymeric liquid material is derived from alkoxy (ethoxy / methoxy) containing silane precursors in monomeric or oligomeric form. This implies that for a Q° monomer and $Q^1$, $Q^2$, $Q^3$ and $Q^4$ moiety, said "alkoxy termination" is comprised of 4, 3, 2, 1 and 0 alkoxy groups, respectively, and for a T° monomer and $T^1$, $T^2$ and $T^3$ moiety, said "alkoxy termination" is comprised of 3, 2, 1 and 0 alkoxy groups, respectively. Analogously, for a D° monomer and $D^1$ and $D^2$ moiety, said " alkoxy termination" is comprised of 2, 1 and 0 alkoxy groups, respectively.

$DP_{Q\text{-type}}$, $DP_{T\text{-type}}$ and $DP_{D\text{-type}}$ of the material can be directly obtained from quantitative $^{29}$Si-NMR data according to:

$$DP_{Q\text{-type}} = \Sigma(n\ A_{Qn}) / \Sigma(A_{Qn}) = (A_{Q1} + 2\ A_{Q2} + 3\ A_{Q3} + 4\ A_{Q4}) / (A_{Q0} + A_{Q1} + A_{Q2} + A_{Q3} + A_{Q4});$$

$$DP_{T\text{-type}} = \Sigma(n\ A_{Tn}) / \Sigma(A_{Tn}) = (A_{T1} + 2\ A_{T2} + 3\ A_{T3}) / (A_{T0} + A_{T1} + A_{T2} + A_{T3})$$ for general T-type silanes;

$$DP_{T\text{-type, bipodal silanes}} = 2 \bullet \Sigma(A_{Tn}) / \Sigma(A_{Tn}) = (A_{T1} + 2\ A_{T2} + 3\ A_{T3}) / (A_{T0} + A_{T1} + A_{T2} + A_{T3})$$ for bipodal T-type silanes; and

$$DP_{D\text{-type}} = \Sigma(n\ A_{Dn}) / \Sigma(A_{Dn}) = (A_{D1} + 2\ A_{D2}) / (A_{D0} + A_{D1} + A_{D2}).$$

In the above equation for $DP_{Q\text{-type}}$, the terms $A_{Qn}$ denote the quantitative $^{29}$Si-NMR peak area related to that $Q^n$ moiety (spectral signature), which is a Si atom coordinated by n siloxane bonds through bridging oxygen (BO) atoms, that connect it to its next-nearest-neighbor Si atoms and (4-n) non-bridging oxygen (NBO) atoms which are linked to terminal alkoxy groups Si-OR as defined herein. Analogously, $A_{Tn}$ and $A_{Dn}$ denote the $^{29}$Si-NMR peak areas corresponding to the respective T-type and D-type moieties (spectral signatures).

For the above definition of DP, $Q^2$ and $Q^3$ refer to all types of $Q^2$ and $Q^3$ species, including linear and single ring as well as double ring species.

Regarding the equation for $DP_{T\text{-type}}$ it is necessary to differentiate between the class of bipodal T-type silanes and all the other, "general" T-type silanes. The latter constitute the majority of commercially available T-type silanes and comprise only a single Si atom connected to three alkoxy and one organofunctional group. In contrast, bipodal silanes, which can be represented as $(RO)_3Si\text{-}(CH_2)\text{-}X\text{-}(CH_2)\text{-}Si(OR)_3$ contain a further trialkoxysilyl unit attached to the first one through a suitable linker group "X" and each spaced by at least one methylene ($-CH_2-$) group. The introduction of a modified definition for the degree of polymerization of bipodal silanes takes into account that a single connectivity to the polysiloxane network is sufficient to covalently attach the functional group and develop its targeted interface functionality.

For organofunctional T type tri- and D-type di-alkoxysilanes, the $^{29}$Si spectral fingerprint regions are shifted progressively further downfield allowing a clear separation of the different non-organofunctional $Q^n$ from organofunctional $T^m$ and $D^l$ moieties.

Optionally, the total silicon to free hydrolysable alkoxy molar ratio in the material described herein is in the range of 1:1.0 to 1:3.0, optionally 1:1.2 to 1:2.5, optionally 1:1.3 to 1:2.2 if the total content of di-organofunctional D-type siloxane moieties (iii) in the polysiloxane material does not exceed 10 mol-%.

Optionally, the molar number of ethoxy terminating units ($-OCH_2CH_3$) in the material described herein is at least twice the number of methoxy terminating units ($-OCH_3$) and the material is essentially free of propoxy terminating units (-OPropyl), e.g. less than 3 % of all alkoxy terminating units are propoxy terminating units.

Optionally, the molar number of methoxy terminating units ($-OCH_3$) in the material described herein is at least twice the number of ethoxy terminating units ($-OCH_2CH_3$) and the material is essentially free of propoxy terminating units (-OPropyl), e.g. less than 3 % of all alkoxy terminating units are propoxy terminating units.

Generally, parameters that define the polymeric liquid material described herein can be measured using standard analytical tools: The content of hydroxy groups in the material can be determined, e.g., using $^{29}$Si- and/or $^{1}$H-NMR spectroscopy and Karl Fischer titration. The molar ratio of ethoxy and methoxy terminal alkoxy units in the material are directly accessible from $^{13}$C-NMR and independently from $^{29}$Si-NMR data.

Viscosity is readily analyzed, e.g. at 20 °C, e.g. by means of standardized viscosity measurements such as a cylindrical rotation viscometer, e.g. at 20 °C, e.g. according to, e.g., ASTM E2975-15: "Standard Test Method for Calibration of Concentric Cylinder Rotational Viscometers". Other viscosity test methods are also possible such as, e.g., Staudinger-type capillary viscometers or modern, dynamic viscometry methods at 20 °C. The material and/or the composition of the present invention optionally has a viscosity in the range of 100 mPas to 100’000 mPas, optionally about 300 mPas to 50’000 cP, optionally 500 mPas to 30’000 mPas, for example as measured in a cylindrical rotation viscometer

at 20 °C, e.g. according to ASTM E2975-15: "Standard Test Method for Calibration of Concentric Cylinder Rotational Viscometers". A viscosity measurement of the material is preferably done on a material essentially consisting of a polymeric polysiloxane material, which has previously been purified. Purification can be done, e.g., by means of a thin film evaporator setup at, e.g. 150°C, with a vacuum, e.g. < $10^{-1}$ bar, which separates monomers and low molecular oligomers from the polymeric liquid material itself (see Macromolecules 2006, 39, 5, 1701-1708).

If b is 0 (zero), moiety (I) is

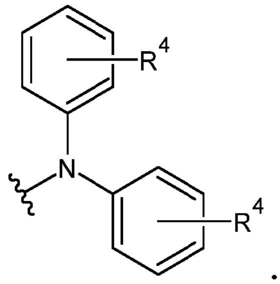

The following notation:

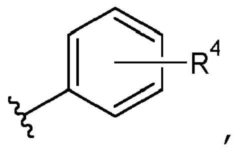

as used herein and unless specifically stated otherwise, means that the phenyl ring can comprise 1, 2, 3, or 5 $R^4$ residues. If multiple $R^4$ residues are attached to the phenyl ring, these can be the same or different residues selected from the group consisting of -H, methyl, ethyl, $-CH=CH_2$, -Cl, -Br, -I, -CN, -SCN, $-N_3$, $-NO_2$, $-SO_2OH$, - $SO_2OR^{1'}$ and $-C(=O)R^{1'}$. If, for example, 1, 2, 3 or 4 $R^4$(s) is/are not H, the other positions at the phenyl ring can be hydrogen.

$\mathbf{R^{1'}}$ is selected from the group consisting of methyl, ethyl, propyl, butyl, pentyl and hexyl, which includes linear and branched propyl, butyl, pentyl and hexyl, e.g. a n-butyl, iso-butyl, sec-butyl, tert-butyl, n-pentyl, iso-pentyl, n-hexyl, etc.

$\mathbf{R^8}$ is an aliphatic, aromatic or unsaturated, substituted or non-substituted $C_{4-20}$ hydrocarbon, and/or an aliphatic, aromatic or unsaturated, substituted or non-substituted residue selected from the group consisting of β-hydroxy ethers, β-hydroxy thioethers, β-hydroxy amines, oxazolidones, ureas, cyanurates thio-ureas, urethanes and combinations thereof in polymeric or oligomeric form having a mass-average molecular weight of 100 to 20’000 g/mol, 150 to 15’000 g/mol, or 170 to 10’000 g/mol.

Aliphatic, aromatic or unsaturated $C_{4-20}$ hydrocarbons include $C_{4-20}$ alkyl, alkenyl, alkynyl, and aromatic hydrocarbons, such as five and six membered aromatic rings, including, e.g. methylene diphenyl, optionally comprising at least one heteroatom. The $C_{4-20}$ hydrocarbon and/or the residue can be linear or branched. Exemplary aliphatic, aromatic or unsaturated $C_{4-20}$ hydrocarbons include $C_{4-20}$ alkyl, alkenyl, alkynyl, and aromatic hydrocarbons that are substituted or in particular terminated with at least one glycidoxy and/or isocyanate group. When the $C_{4-20}$ hydrocarbons include at least one isocyanate, gylcidoxy or epoxide moiety, this moiety can be installed in particular terminally or, alternatively, at any carbon atom(s) in the hydrocarbon. Exemplary $C_{4-20}$ hydrocarbons include: (a) exemplary hydrocarbons such as fatty acids, amino-, mercapto-, sulfonate-, and/or halogen-substituted $C_{4-20}$ hydrocarbons, e.g. including substituted phenyl and naphthyl hydrocarbons; and (b) exemplary hydrocarbons (including bis phenyl-comprising hydrocarbons) with epoxide, glycidoxy or isocyanate moieties, such as glycidyl- or isocyanate-substituted $C_{4-20}$ hydrocarbons, optionally glycidyl- or isocyanate-substituted biphenyl compounds, for example based on Bisphenol A or F, glycidyl- or isocyanate-substituted linear or cyclic hydrocarbons, optionally $C_{2-12}$ hydrocarbons or $C_{4-6}$ hydrocarbons, methyl(trimethylcyclohexyl), phenyl or methylphenyl. For example, $R^8$ can be an isocyanate-terminated (e.g. HDI Monomer (Desmodur H)) and/or a glycidoxy-terminated aliphatic, aromatic or unsaturated, substituted or non-substituted $C_{4-20}$ hydrocarbon and/or residue.

Aliphatic, aromatic or unsaturated, substituted or non-substituted β-hydroxy ethers, β-hydroxy thioethers, β-hydroxy amines, oxazolidones, ureas, cyanurates, thio-ureas, urethanes and combinations thereof in polymeric or oligomeric form refer to aliphatic, aromatic or unsaturated (including mixed aliphatic - aromatic hydrocarbons) comprising β-hydroxy ethers, β-hydroxy thioethers, β-hydroxy amines, oxazolidones, ureas, cyanurates, thio-ureas and/or urethanes to from oligomers or polymers of the hydrocarbon moieties or repeat units. In other words, hydrocarbon-based monomers are connected by β-hydroxy ethers, β-hydroxy thioether, β-hydroxy amine, oxazolidone, urea, cyanurate, thio-urea and/or urethane linkages to make up oligomer or polymer chains / polycondensation products or so-called isocyanate- and/or

epoxy-functional prepolymers. If $R^8$ does not comprise any aliphatic, aromatic or unsaturated $C_{4-20}$ hydrocarbons with at least one moiety selected from the group consisting of an isocyanate and an epoxide, then the β-hydroxy ethers, β-hydroxy thioethers, β-hydroxy amines, oxazolidones, ureas, cyanurates, thio-ureas and/or urethanes comprise at least one isocyanate or epoxide functionality (i.e. an unreacted functionality with intact isocyanate or epoxide unit) which can, for example be a terminal isocyanate or epoxide group. For example, the β-hydroxy ethers, β-hydroxy thioethers, β-hydroxy amines, oxazolidones, ureas, cyanurates, thio-ureas and/or urethanes can be connected to $R^6$ by means of their functionalities, if chemically reasonable. For example, a β-hydroxyamine can form the following $R^6$:

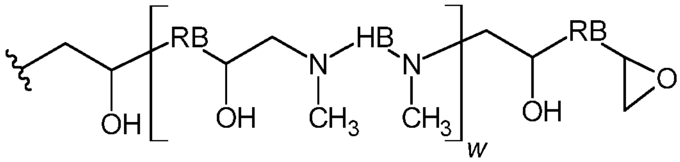
,

wherein RB is a resin backbone structure (e.g. a diphenyl, e.g. substituted with gylcidoxy/epoxy-groups) and HB is a hardener backbone structure (e.g. a linear branched or cyclic hydrocarbon structure, e.g. ethylene diamine, $-CH_2-CH(CH_2NH_2)-CH_2-$), respectively and w is an integer including zero (e.g. 0 or 1 to 20, 1 to 10, or 1 to 6) suitable for achieving the mass-average molecular weight of 100 to 20'000 g/mol. In this example, $R^6$ can be the result of a siloxane-bound epoxide prepolymer comprising w repeating units (given by the structure in parentheses in the example of beta-hydroxyamine) with an attached terminal epoxy group. It is noted that for the determination of the mass-average molecular weight, only $R^8$ is considered, and not the atoms shown for $R^6$. The $R^6$ residue may also include branched polymer structures as rendered possible by the use of multifunctional RB and/or HB subunits.

The hydrocarbons between the β-hydroxy ether, β-hydroxy thioether, β-hydroxy amine, oxazolidone, urea, cyanurate, thio-urea and/or urethane moiety can be those hydrocarbons defined above. Exemplary β-hydroxy ethers, β-hydroxy thioethers, β-hydroxy amines, oxazolidones, ureas, cyanurates, thio-ureas and/or urethanes include typical isocyanate or epoxy functional prepolymer moieties i.e. the residue from typical reaction products involving either i) isocyanate precursors such as di- or triisocyanates, isocyanurates and other commonly used isocyanate functional precursors with diols, polyols, dithiols or polythiols, diamines or polyamines or ii) epoxide precursors such as bisphenol-based epoxy resins, novolac epoxy resins, etc., with diamines, triamines, polyamines, dithiols, polythiols, cyclic anhydrides, organic dicarboxylates and so on. Note that these exemplary residues have at least one residual terminal functional isocyanate or epoxy group attached to the terminal moiety where the other terminal reactive group through which it is attached through the $R^6$ of the polysiloxane was reacted off during this attachment / reactive blending step.

The skilled person, especially in the art of isocyanate / polyurethane chemistry or epoxy resin thermoset chemistry, will know well which combinations of raw materials and reaction conditions can be used to prepare such prepolymers or prepolymer blends. These blends can then be tethered to the QT-polysiloxane backbone as described also in the method disclosed herein.

For example, and for all embodiments and aspects disclosed herein, the composition optionally further comprises molecules corresponding to $R^8$ which are not covalently bound to a siloxane moiety of the present material. Such "free" $R^8$ molecules are those chemical entities defined for $R^8$ but are not attached to a siloxane moiety, and e.g. comprise group that could react with the siloxane moiety did not. These "free" $R^8$ molecules can comprise isocyanate and/or epoxide moieties.

The mass-average molecular weight of $R^8$ (i.e. of the β-hydroxy ethers, β-hydroxy thioethers, β-hydroxy amines, oxazolidones, ureas, cyanurates, thio-ureas, urethanes and combinations thereof in polymeric or oligomeric form) refers to the mass-average molecular weight of the residue $R^8$ (i.e. the β-hydroxy ethers, β-hydroxy thioethers, β-hydroxy amines, oxazolidones, ureas, cyanurates, thio-ureas, urethanes and combinations thereof in polymeric or oligomeric form) before it is attached to $R^6$.

The term "non-substituted" as used herein shall mean substituted only with hydrogen. The term "substituted" as used herein, means that any one or more hydrogens on the designated atom or group is replaced, independently, with an atom different from hydrogen, optionally by a halogen, optionally by fluorine, chlorine, bromine, iodine, a thiol, a carboxyl, an acrylato, a cyano, a nitro, an alkyl (optionally $C_1$-$C_{10}$), aryl (optionally phenyl, benzyl or benzoyl), an alkoxy group, a sulfonyl group, by a tertiary or quaternary amine or by a selection from the indicated substituents, provided that the designated atom's normal valence is not exceeded, and that the substitution results in a stable compound, i.e., a compound that can be isolated and characterized using conventional means.

In the context of the present invention, it is understood that antecedent terms such as "linear or branched", "substituted or non-substituted" indicate that each one of the subsequent terms is to be interpreted as being modified by said antecedent term. For example, the scope of the term "linear or branched, substituted or non-substituted alkyl, alkenyl and alkynyl" encompasses linear, branched or cyclic, substituted or non-substituted alkyl; linear, branched or cyclic,

substituted or non-substituted alkenyl; and linear, branched or cyclic, substituted or non-substituted alkynyl. For example, the term "$C_{4-20}$ alkyl, $C_{4-20}$ alkenyl and $C_{4-20}$ alkynyl" indicates the group of compounds having 4 to 20 carbons and alkyl, alkenyl or alkynyl functionality.

The expression "alkyl" refers to a saturated, straight-chain or branched hydrocarbon group that contains the number of carbon items indicated, e.g. linear, branched or cyclic " ($C_{4-20}$) alkyl" denotes a hydrocarbon residue containing from 4 to 20 carbon atoms, e.g. a n-butyl, iso-butyl, sec-butyl, tert-butyl, n-pentyl, iso-pentyl, n-hexyl, 2,2-dimethylbutyl, cyclopropane, cyclobutane, cyclopentane, cyclohexane, cycloheptane, cyclooctane, cyclononane, cylcodecane, etc.

If an alkyl chain is characterized by a name that allows for linear or branched isomers, all linear or branched isomers are encompassed by that name. For example, "butyl" encompasses n-butyl, *iso*-butyl, *sec*-butyl and *tert*-butyl.

The expression "alkenyl" refers to an at least partially unsaturated, substituted or non-substituted straight-chain or branched hydrocarbon group that contains the number of carbon atoms indicated, e.g. " ($C_{4-20}$) alkenyl" denotes a hydrocarbon residue containing from 4 to 20 carbon atoms, for example an butenyl, *iso*-prenyl or hex-2-enyl group, or, for example, a hydrocarbon group comprising a methylene chain interrupted by one double bond as, for example, found in monounsaturated fatty acids or a hydrocarbon group comprising methylene-interrupted polyenes, e.g. hydrocarbon groups comprising two or more of the following structural unit -[$CH=CH-CH_2$]-, as, for example, found in polyunsaturated fatty acids.

The expression "alkynyl" refers to at least partially unsaturated, substituted or non-substituted straight-chain or branched hydrocarbon groups that may contain, e.g. from 4 to 20 carbon atoms and at least one triple bond, for example a butinyl, acetylenyl, or propargyl group.

Optionally, the composition comprises less than 30 weight-%, less than 25 weight-% or less than 20 weight-% polyols that are not covalently bound to the polymeric liquid polysiloxane material relative to the total weight of the composition.

The term "polyols" as referred to herein, refers to organic polyols, e.g. diols, triols and tetrols, e.g. polyether, polyester, acrylic polyols, and polycarbonate polyols. For example, the polyols have a low-molecular weight, e.g. less than about 250 g/mol, e.g. mass-average molecular weight. Examples include ethylene glycol, propylene glycol, butylene glycol, glycerol, trimethyloylpropane, pentaerythritol, sugar alcohols such as xylitol, mannitol, etc. Further examples of polyols include alkyl ether polyols such as polyethylene glycol (PEG), poly(propylene oxide), poly-propylene glycol (PPG) and polytetrahydrofuran chains as homopolymer, heteropolymer or block copolymer polyols. Furthermore, also polycondensation polyols such as polyester polyols, polycarbonate polyols and polyamide polyols are encompassed by the term "polyols" as used herein. In the context of the present invention, polyols may be present as free polyols in a composition containing free epoxy reactive groups and/or resins as an ingredient. Alternatively, the polyols can be present in a composition comprising blocked isocyanates.

The weight-% of polyols is defined herein relative to the total weight of the composition. To determine the weight-%, the weight of the total composition is determined, e.g. on a balance, and the total weight of the polyols is determined for example by a prior separation step of the composition (extraction, chromatography etc.) and subsequent analysis for example by means of liquid chromatography (HPLC-MS, GPC) or other suitable analytical techniques known to the expert.

As used herein, a wording defining the limits of a range of length such as, e. g., "from 1 to 5" or "($C_{1-5}$)" means any integer from 1 to 5, i.e. 1, 2, 3, 4 and 5. In other words, any range defined by two integers explicitly mentioned is meant to comprise and disclose any integer defining said limits and any integer comprised in said range.

For example, the scope of the present invention includes those analogs of the compounds as described above and in the claims that feature the exchange of one or more carbon-bonded hydrogens, optionally one or more aromatic carbon-bonded hydrogens, with halogen atoms such as F, Cl, or Br, optionally F.

If a residue or group described herein is characterized in having two further residues of the same name, e.g. in Z being

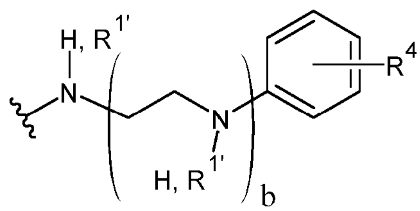

,

each of these further residues (in this example H or $R^{1'}$) can be independently selected from the definitions of this residue (in this example H or $R^{1'}$) given herein.

For example, and for all embodiments and aspects disclosed herein, $\mathbf{R^4}$ can be a residue selected from the group consisting of -H, methyl, ethyl, $-CH=CH_2$, -Cl, -Br, -I, $-SO_2OH$, $-SO_2OR^{1'}$ and - $C(=O)R^{1'}$. For example, and for all embodiments and aspects disclosed herein, one $\mathbf{R^4}$ can be a residue selected from the group consisting of methyl, ethyl,

$-CH=CH_2$, -Cl, -Br, -I, -CN, -SCN, $-N_3$, $-NO_2$, $-SO_2OH$, $-SO_2OR^{1'}$ and $-C(=O)R^{1'}$, and the other four $R^4$ on the phenyl ring are hydrogen.

Optionally, polysiloxane material disclosed herein may be one, wherein

- the polysiloxane material comprises less than 45, optionally less than 37, optionally less than 30 or less than 25 mol-% four-membered combined $Q^{2r}$-type and $Q^{3s,d}$-type siloxane ring species relative to the total Q-type siloxane species; and/or
- the polysiloxane material comprises less than 70, optionally less than 63, optionally less than 56 or less than 50 mol-% four-membered combined $Q^{3s,3d}$-type siloxane ring species relative to all $Q^3$-type siloxane species; and/or
- the polysiloxane material comprises less than 4.5, optionally less than 4.0, optionally less than 3.5 or less than 3.0 mol-% double four-membered $Q^{3d}$-type siloxane ring species relative to the total Q-type siloxane species; and/or
- the polysiloxane material comprises less than 25, optionally less than 20, optionally less than 17 or less than 14 mol-% double four-membered $Q^{3d}$-type siloxane ring species relative to all $Q^3$-type siloxane species.

The term "four-membered" ring or polysiloxane ring or Q-type ring species as referred to herein always refers to an ensemble of all $Q^{2r}$ and $Q^{3s,d}$-type moieties comprised in the material which are part of a four membered polysiloxane ring structure. Two representative examples of such typical configurations of moieties in single and double four-membered ring structures are shown in the following formulas.

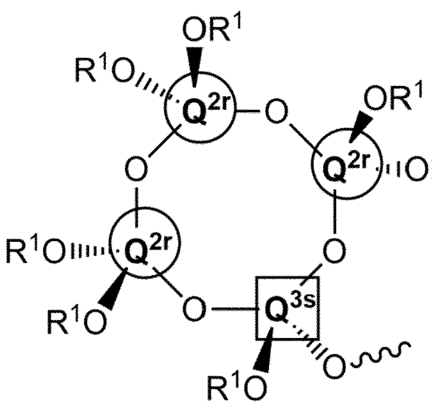

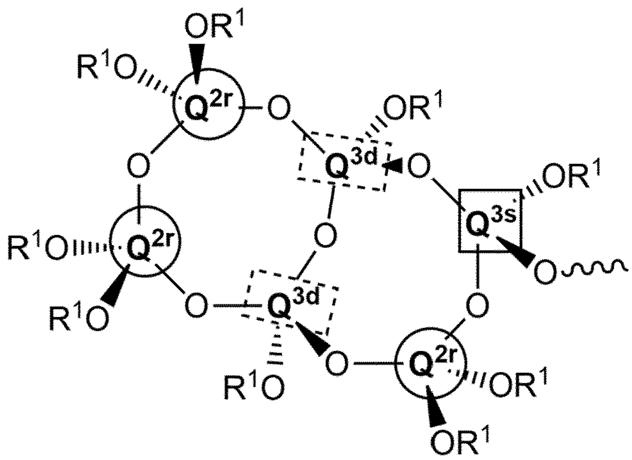

$Q^{2r}$ ring moieties occur in both, "single" and "double" ring structures and comprise two siloxane bonds on each $Q^{2r}$ which are both part of the ring structure and two alkoxy group ($-OR^1$) substituents. In the example on the left of a single four-membered siloxane ring, only $Q^{2r}$ ring (circle) and "single ring" $Q^{3s}$ (square) species are possible. In the second example of two connected four-membered siloxane rings (a bi-cyclic structure) shown on the right, in addition to $Q^{2r}$ ring species (circle) and "single ring" $Q^{3s}$ (square) species, also "double ring" $Q^{3d}$ (rectangle, dashed line) moieties are possible, which are located at the bridge sites connecting the two rings. It is noted that in these $Q^{3d}$ species, all siloxane bonds are part of the double ring network. Also, it is noted that the wiggly lines on the oxygen atoms connected to $Q^{3s}$ moieties represent a siloxane bond to any other possible $Q^n$, $T^n$, $D^n$ or $M^n$ moiety with n >= 1. It must further be understood, that in the above examples for typical configurations, moieties are of Q-type but that these are only examples for assisting the skilled person's understanding but in reality there is no restriction to Q-type moieties. In fact, it is within the scope of this disclosure and very much expected that in such four-membered polysiloxane ring structures also T-type and/or D-type moieties will be present.

Herein, $Q^2$ species in any four membered siloxane ring structures are termed "$Q^{2r}$" and "$Q^3$" species in single ring structures and in double ring structures are termed "$Q^{3s}$" and "$Q^{3d}$", respectively.

For quantification purposes, there are different indicators that can be used to define or constrict the above mentioned four membered polysiloxane ring species. A first indicator is to be defined as the total number of $Q^{2r}$ and $Q^{3s,d}$ ring species over the total Q species in the material (for disambiguation, the "l" in $A_{Q3l}$ stands for linear) :

$$\%(Q^{2r}\&Q^{3s,d})\ \text{ring species} = 100 \cdot \Sigma(A_{Q2rings} + A_{Q3rings}) / \Sigma(A_{Qn})$$

$$= 100 \cdot (A_{Q2r} + A_{Q3s} + A_{Q3r}) / (A_{Q0} + A_{Q1} + A_{Q2} + A_{Q3} + A_{Q4});$$

A second indicator is to be defined as the total number of $Q^{3s,d}$ ring species over all $Q^3$ species in the material:

$$\%(Q^{3s,d})\ \text{ring species within}\ Q^3 = 100 \cdot \Sigma(A_{Q3rings}) / A_{Q3} = 100 \cdot (A_{Q3s} + A_{Q3d}) / A_{Q3} = 100\ (1 - (A_{Q31} / A_{Q3}))$$

A third indicator is to be defined as the total number of $Q^{3d}$ ring species over the total Q species in the material:

$$\%(Q^{3d})\ \text{ring species} = 100 \cdot A_{Q3d} / \Sigma(A_{Qn}) = 100 \cdot A_{Q3d} / (A_{Q0} + A_{Q1} + A_{Q2} + A_{Q3} + A_{Q4});$$

A fourth indicator is to be defined as the total number of $Q^{3d}$ ring species over all $Q^3$ species in the material:

$$\%(Q^{3d})\ \text{ring species within}\ Q^3 = 100 \cdot A_{Q3d} / A_{Q3}.$$

The mol-% of four-membered $Q^2$-type and/or $Q^3$-type siloxane ring species relative to the total Q-type siloxane species can be determined by $^{29}$Si-NMR analysis, as known in the art. The polysiloxane material described herein comprises less than the stated mol-% four-membered ($Q^{2r}$ & $Q^{3s,d}$) and/or ($Q^{2r}$) and/or ($Q^{3s}$ single) and/or ($Q^{3d}$ double) ring species relative to the total Q-type siloxane species. This means that the material comprises either less than the stated mol-% four-membered $Q^{2r}$-type siloxane ring species, less than the stated mol-% four-membered $Q^{3s,d}$-type siloxane ring species and/or less than the stated mol-% four-membered $Q^{2r}$-type and $Q^{3s,d}$-type siloxane ring species, cumulatively. For all embodiments described herein, the four-membered $Q^{3s,d}$-type siloxane ring species includes $Q^{3s,d}$-type siloxane species, wherein one $Q^{3s,d}$-type siloxane is part of one or two four-membered rings.

In an embodiment of the composition according to the present invention, which may be combined with any of the embodiments of the composition preaddressed or still to be addressed unless in contradiction, the composition, optionally the polymeric liquid polysiloxane material, comprises at least 0.05 mmol/g, 0.1 mmol/g, 0.2 mmol/g, 0.5 mmol/g, or 1.0 mmol/g of isocyanate and/or epoxide groups on a total resins basis. In other words, the total number (mmol) of all isocyanates and epoxides in the composition, optionally in the polymeric liquid polysiloxane material, are counted together relative to the weight of all resin materials present in the composition. All isocyanates and epoxides in the polymeric liquid polysiloxane material refer to all isocyanate and epoxide groups on residues bound to a siloxane moiety of the polysiloxane material. The "total resins basis" is the weight of all resin materials in the composition, which includes all polymeric components but excludes, for example, solvents, fillers, plasticizers or monomeric components. Alternatively, the relationship between the total number of isocyanate and/or epoxide groups in the composition, optionally on the polymeric liquid polysiloxane material, can be characterized by parts NCO or parts epoxy per hundred rubber (phr) on a mass basis as follows: the composition, optionally the polymeric liquid polysiloxane material, comprises at least 0.5 phr, 1.0 phr, 2.0 phr, 3.5 phr, or 5.0 phr of isocyanate and/or epoxide groups.

In an embodiment of the composition according to the present invention, which may be combined with any of the embodiments of the composition preaddressed or still to be addressed unless in contradiction, **Z** is selected from the group consisting of **-$SR^6$**, - **$NHR^6$, -$NR^6R^7$**, and optionally **-$N(R^6)_2$** moiety (I):

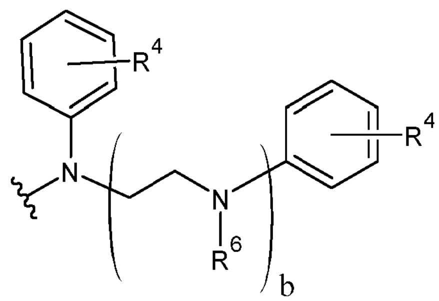

,

moiety (II):

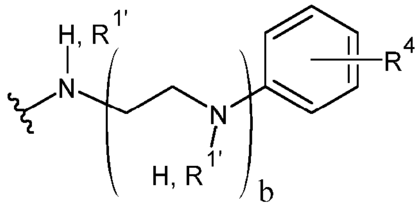

,

wherein $R^4$ is H or $CH=CH_2$, and moiety (III):

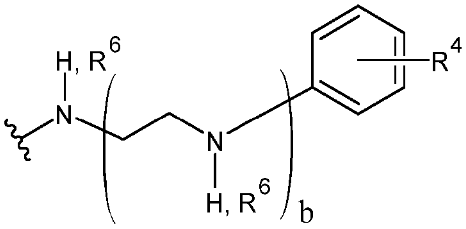

,

wherein moiety (III) comprises least one $R^6$ residue,
optionally wherein the composition or the polymeric liquid polysiloxane material comprises at least at least 0.1 mmol/g, optionally at least 0.2 mmol/g, optionally at least 0.35 mmol/g, optionally at least 0.5 mmol/g of isocyanate and/or epoxide groups on a total resins basis.

In an embodiment of the composition according to the present invention, which may be combined with any of the embodiments of the composition preaddressed or still to be addressed unless in contradiction, $\mathbf{R^8}$ is

- an aliphatic or aromatic, substituted or non-substituted $C_{4-20}$ hydrocarbon, and/or
- an aliphatic or aromatic, substituted or non-substituted residue selected from the group consisting of β-hydroxy ethers, β-hydroxy thioethers, β-hydroxy amines, ureas, cyanurates, thio-ureas, urethanes and combinations thereof in polymeric or oligomeric form having a mass-average molecular weight of 170 g/mol to 10'000 g/mol.

In an embodiment of the composition according to the present invention, which may be combined with any of the embodiments of the composition preaddressed or still to be addressed unless in contradiction, $\mathbf{R^4}$ is H or $CH=CH_2$.

Optionally, the composition as described herein is one, wherein $\mathbf{R^8}$ is not a residue selected from the group consisting of:

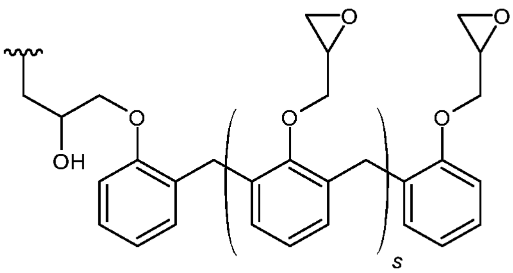

,

wherein s= 1 to 20,

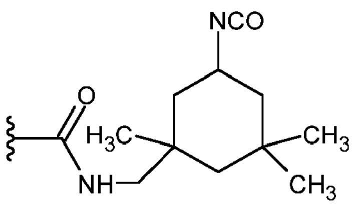

,

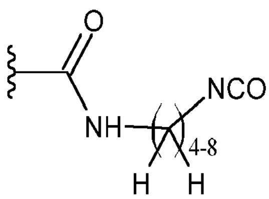

and

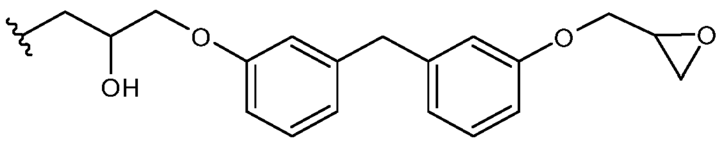

.

In an embodiment of the composition according to the present invention, which may be combined with any of the embodiments of the composition preaddressed or still to be addressed unless in contradiction, the composition is one, wherein for Z being **-SR$^6$** or -**NHR$^6$**, **R$^8$** is not a residue selected from the group consisting of:

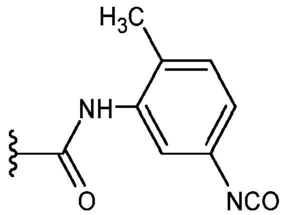
,
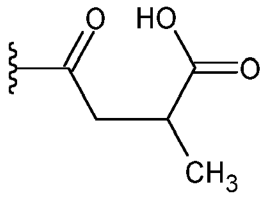
,
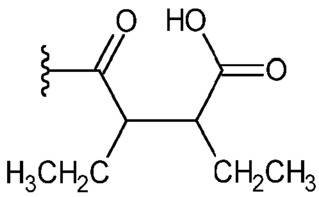
,
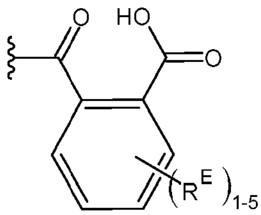
,

wherein **R$^E$** is $C_{1-18}$ alkyl, $C_{2-18}$ alkenyl or $C_{2-18}$ alkynyl,

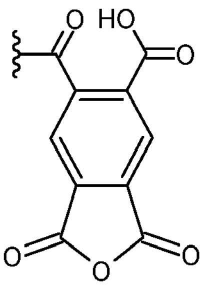
,
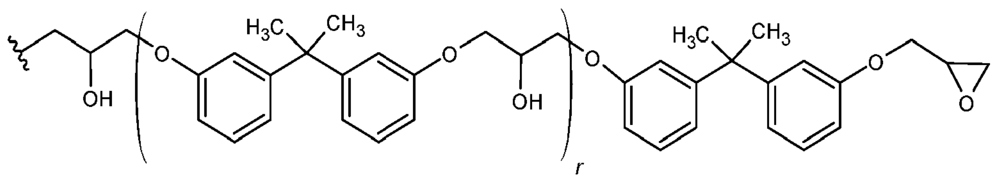
,

wherein r = 1 to 10,

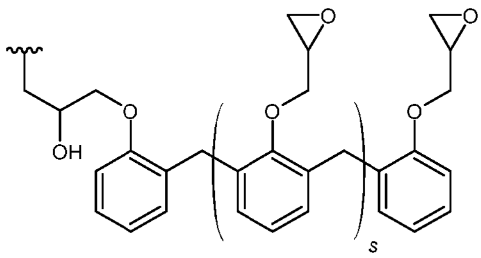
,

wherein s = 1 to

20,

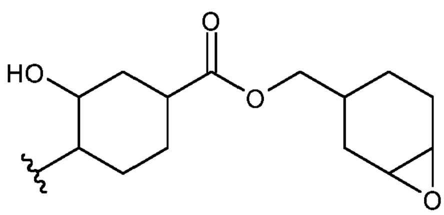

and

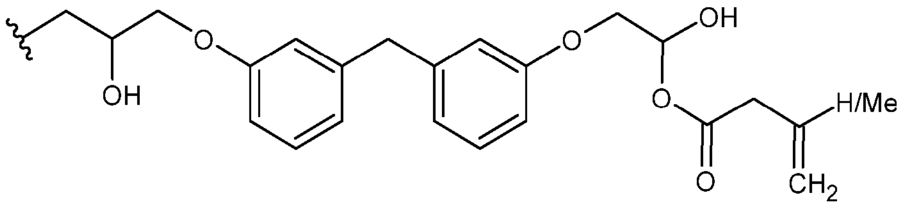

.

In an embodiment of the composition according to the present invention, which may be combined with any of the embodiments of the composition preaddressed or still to be addressed unless in contradiction,

**a** is 1, 2, 3 or 4, and/or
**b** is 0 or 1, and/or
**$R^{1'}$** is selected from the group consisting of methyl, ethyl, propyl and butyl;
**$R^4$** is selected from the group consisting of H or $CH{=}CH_2$, and/or
**Z** is selected from the group consisting of -**$SR^6$**, -**$NHR^6$**, -**$NR^6R^7$**, and optionally **-$N(R^6)_2$**, moiety (II):

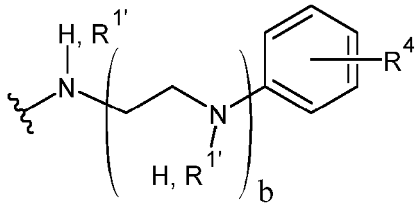

,

wherein $R^4$ is H if b is 0, and
moiety (III):

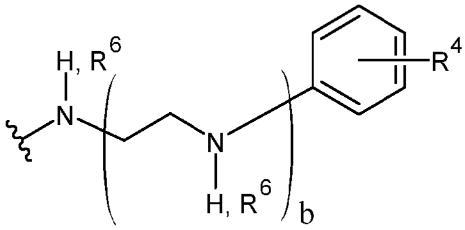

,

wherein moiety (III) comprises least one $R^6$ residue.

In an embodiment of the composition according to the present invention, which may be combined with any of the embodiments of the composition preaddressed or still to be addressed unless in contradiction, **$R^6$** comprises **$R^8$** that is selected from the group consisting of

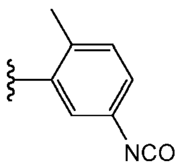 , 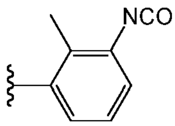 , 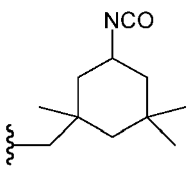 , 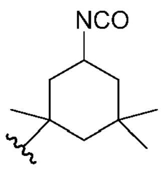 , 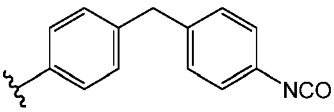 ,

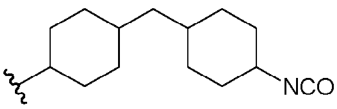 , 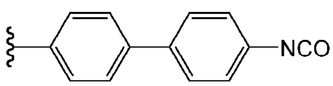 , and 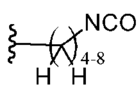 ,

in monomeric, biuret, uretdione and triisocyanurate form;

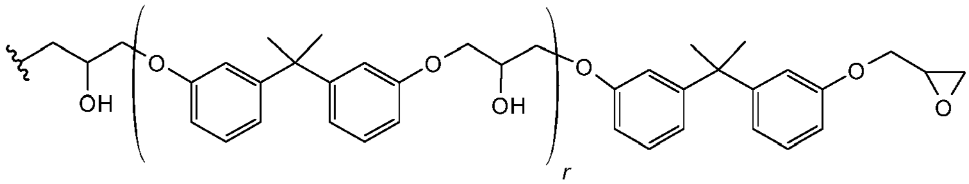

,

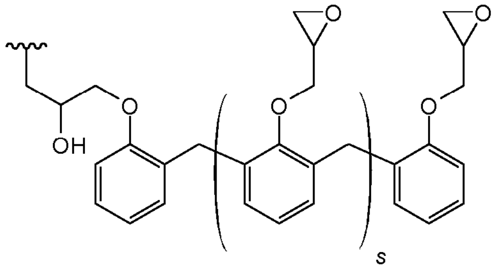

,

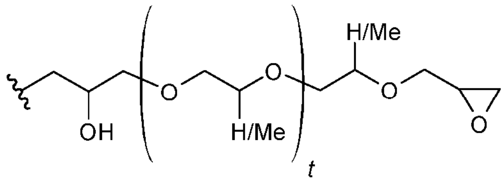

,

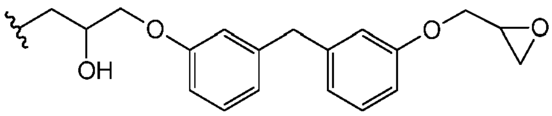

,

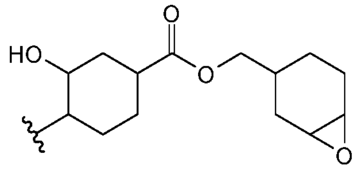

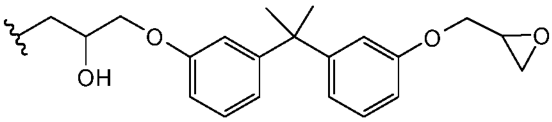

,

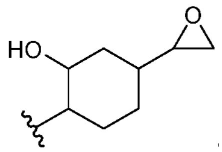

and

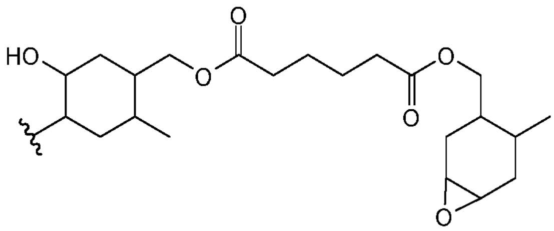

,

wherein **r** is an integer from 1 to 100, **s** is an integer from 1 to 15 and **t** is an integer from 1 to 10.

The term "in monomeric, biuret, uretdione or tri-isocyanurate form" means that the depicted chemical entities may be in their monomeric form, i.e. correspond to the entity depicted, in their biuret form, i.e. correspond to three or optionally up to five, of the depicted monomers coupled by the diamide formed from isocyanate functionalities, in their uretdione form, i.e. as a dimer, or in their tri-isocyanurate from, i.e. correspond to three of the depicted monomers coupled by a cyclic isocyanurate group formed from isocyanate functionalities.

For example, the uretdione form of an $R^5$ attached monomer is

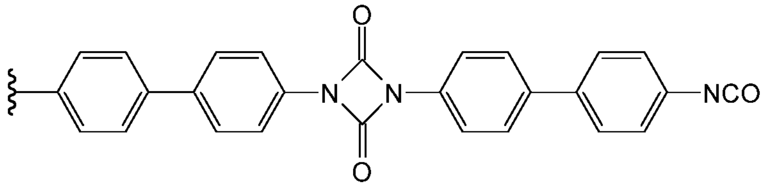

Generally, the biuret form is as shown below:

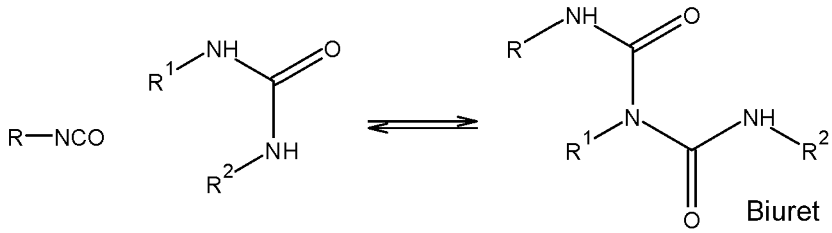


For example, the biuret form of the $R^5$ attached monomer

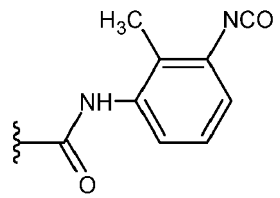

is

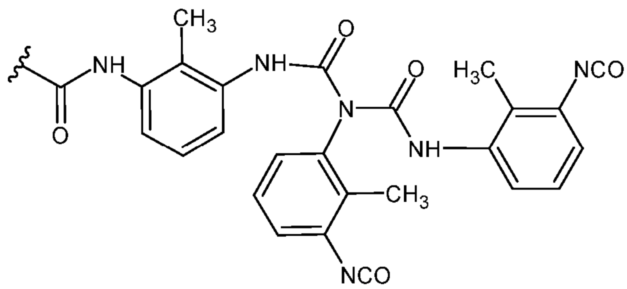

and the corresponding tri-isocyanurate form is

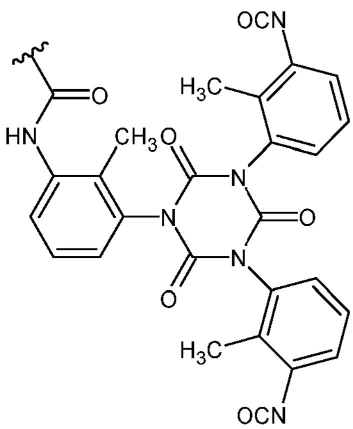.

In an embodiment of the composition according to the present invention, which may be combined with any of the embodiments of the composition preaddressed or still to be addressed unless in contradiction, the atomic ratio of T- to Q-species in the polymeric liquid polysiloxane material is in the range of 0.01:1 to 0.5:1, optionally in the range of 0.03:1 to 0.35:1.

The atomic ratio of T- to Q-species in the material is the ratio between the silicon atoms of all T-type species ($T^0$, $T^1$, $T^2$ and $T^3$) and the silicon atoms of all Q-type species ($Q^0$, $Q^1$, $Q^2$, $Q^3$ and $Q^4$).

In an embodiment of the composition according to the present invention, which may be combined with any of the embodiments of the composition preaddressed or still to be addressed unless in contradiction,

- the degree of polymerization of the Q-type alkoxy-terminated moieties of the material $DP_{Q\text{-}type}$ is in the range of 1.6 to 2.4 and the atomic ratio of T- to Q-species in the material is in the range of 0.02:1 to 0.4:1;

- if the material comprises about or more than 5 mol-% M-type moieties, the degree of polymerization of the Q-type alkoxy-terminated moieties of the material $DP_{Q\text{-}type}$ is in the range of 1.7 to 2.5 and the atomic ratio of T- to Q-species in the material is in the range of 0.02:1 to 0.4:1;
- the degree of polymerization of the D-type alkoxy-terminated siloxane moieties of the material $DP_{D\text{-}type}$ is in the range of 1.25 to 1.75; and/or
- the degree of polymerization of the T-type alkoxy-terminated siloxane moieties of the material $DP_{T\text{-}type}$ is in the range of 1.3 to 2.2.

Optionally, the composition as described herein is one, wherein the total content of di-organofunctional D-type siloxane and/or the total content tri-organofunctional M-type siloxane moieties in the polymeric liquid polysiloxane material is zero.

Further objectives are achieved by the products, methods compositions and formulations according to claims 11 to 15.

In another aspect which may be combined with any of the embodiments or aspects preaddressed or still to be addressed unless in contradiction, the present invention is directed to a hydrolysis or emulsion product obtainable by reacting a composition as described herein with

- a predetermined amount of water or with a predetermined amount of a water-solvent mixture, optionally in the presence of at least one surfactant for the hydrolysis product, or
- a predetermined amount of water, optionally in the presence of at least one surfactant for the emulsion product.

The predetermined amount of water or water-solvent mixture for hydrolysis or for emulsifying is determined, e.g. by the molar amount of water to total molar amount of Si in the system confined in typical formulations by upper and lower bound limits. A lower bound value defining the water to total Si molar ratio can be 0.02:1, optionally 0.1 :1 or 0.5:1. An upper bound value defining the water to total Si molar ratio can be 5’000:1, optionally 500:1 or 50:1. The amount of cosolvent can be chosen independently and technically without limitation imposed by the water to Si molar ratios.

For example, solvents for hydrolysis can be selected from the group consisting of water-soluble organic solvents such as low-molecular weight alcohols, ethers, carboxylic acids, e.g.:

- alcohols of formula $R_x$-OH with $R_x$ being selected from the group consisting of $-CH_3$, $-C_2H_5$, $-C_3H_7$, $-C_4H_9$, $-C_5H_{11}$, and $-C_6H_{13}$;
- ketones of formula $R_x$,$R_y$-(C=O) with $R_x$,$R_y$ independently selected from the group consisting of $-CH_3$, $-C_2H_5$, and $-C_3H_7$;
- carboxylic acids of formula $R_x$-COOH with $R_x$ being selected from the group consisting of $-CH_3$, $-C_2H_5$, $-C_3H_7$, $-C_4H_9$, $-C_5H_{11}$, and $-C_6H_{13}$;
- low-molecular weight organic esters such as ethyl acetate, methyl acetate or ethyl formate, methyl formate; and/or
- ethers of formula $R_x$-O-$R_y$ with $R_x$,$R_y$ being independently selected from the group consisting of $-CH_3$, $-C_2H_5$, and $-C_3H_7$ or cyclic ethers such as tetrahydrofuran.

Together with the solvent, also an acid or a base can be used as a hydrolysis/condensation catalyst. Typical acids to be used are mineral inorganic acids and low-molecular organic carboxylic acids. Typical bases are alkali hydroxides, ammonia or aliphatic / aromatic primary, secondary or tertiary amines.

For example, surfactants for hydrolysis and/or emulsification can be selected from the group consisting of

- non-ionic surfactants such as polyethylene-oxide/polypropylene oxide block copolymers or similar polyether block copolymer surfactants;
- carboxylic acid based ionic surfactants, particularly fatty acids and related saturated or unsaturated linear and or branched aliphatic hydrocarbon-carboxylates such as lauric acid, stearic acid, oleic acid etc. and their corresponding alkali salts;
- sulfonic acid or phosphonic acid based ionic surfactants, particularly saturated or unsaturated linear and or branched aliphatic alkyl-sulfonates such as dodecylsulfonic acid (SDS) or methylsulfonic acid (MSA) or aromatic sulfonates such as toluene sulfonic acid and their corresponding alkali salts; and/or
- trialkylammonium salt based ionic surfactants such as cetyltrimethylammonium bromide (CTAB) or cetyltrimethylammonium chloride (CTAC).

In another aspect which may be combined with any of the embodiments or aspects preaddressed or still to be addressed unless in contradiction, the present invention is directed to a method for preparing a composition comprising the polymeric liquid material disclosed herein, comprising the following steps:

(a) providing a Q-type polymethoxy, polyethoxy, polypropoxy or mixed poly(methoxy/ethoxy/propoxy) polysiloxane precursor, optionally comprising

(a1) di-organofunctional D-type siloxane moieties; and/or
(a2) mono-organofunctional T-type siloxane moieties,
optionally comprising less than 12 mol-% of (a1) and (a2) combined relative to the total amount of all Q-type species;

optionally further comprising a rearrangement catalyst and/or tri-organofunctional M-type siloxane moieties; and

wherein degree of polymerization of the Q-type polysiloxane moieties of the material $DP_{Q\text{-type}}$ is in the range of 1.5 to 2.5, optionally 1.6 to 2.4, optionally 1.65 to 2.35;

(b) adding at least one of a

(b1) tri-organofunctional M-type silane $Si(OR^1)(Me)_3$; and/or
(b2) di-organofunctional D-type silane $Si(OR^1)_2(R^2)(R^3)$,
wherein

$\mathbf{R^2}$ is selected from methyl, vinyl and phenyl; and

$\mathbf{R^3}$ is selected from methyl, vinyl and phenyl;

and/or
(b3) mono-organofunctional T-type silane $Si(OR^1)_3(R^5)$;
in mono- or oligomeric form to the polysiloxane of (a);

(c) optionally adding a rearrangement catalyst to the mixture of step (b);
(d) heating the mixture of (c), optionally in the absence of water;
(e) optionally repeating steps (b) to (d) at least once;
(f) retrieving, optionally isolating and optionally purifying the polymeric liquid material;
(g) mixing the material of step (e) or (f) with a compound or mixture of compounds in oligomeric or polymeric form, each compound comprising at least one isocyanate or epoxide functional group;

with the proviso that at least one of steps (a2) or (b3) is carried out, and
with the proviso that a rearrangement catalyst is present in at least one of steps (a) or (c).

The definitions of chemical substituents in the tri-organofunctional M-type silane $Si(OR^1)(Me)_3$, the di-organofunctional D-type siloxane moieties $Si(OR^1)_2(R^2)(R^3)$ and the mono-organofunctional T-type siloxane moieties $Si(OR^1)_3(R^5)$ in the context of the present method correspond to the definitions given in the context of the polysiloxane material described herein.

Regarding the Q-type polymethoxy, polyethoxy, polypropoxy or mixed poly(methoxy/ethoxy/propoxy) polysiloxane for use in the present method, in particular the synthesis and characterization thereof, reference is made to WO 2022/058059, incorporated by reference in its entirety, specifically pages 42-43. Reference is also made to WO 2022/058059 regarding the definition and examples of the rearrangement catalyst for use in the present method, specifically to pages 43-44. Further definitions and examples provided in WO 2022/058059 on pages 44-46 apply to the method of the present invention and the definitions and examples are included by reference.

The compound in step (g) is a compound which reacts with the polymeric liquid material of step (f) to form the $R^5$ as defined herein for the polymeric liquid polysiloxane material. The skilled person can determine suitable reactants to obtain the material defined herein.

For example, an acid catalyst can be selected from of strong acids with a negative pKa value, preferably selected from the group consisting of hydrochloric acid, nitric acid, sulfuric acid, hydrobromic or hydroiodic acid or organosulfonic acids (methane-, amido- or benzene-sulfonic acid).

For example, the reaction temperature for steps (c) through (e) of the method described herein can be in the

range from 30 to 170, optionally 50 to 150 or 70°C to 120°C, and the pressure during steps (c) through (e) is in the range of 0.1 bar to 2 bar, optionally in the range of 0.5 bar to 1.4 bar or in the range of 0.6 bar to 1.2 bar.

For example, the method can be one, wherein the rearrangement catalyst is selected from the group consisting of

- $Ti(IV)(OR^{13})_4$ and $Zr(IV)(OR^{13})_4$;
- $Ti(IV)X_4$ and $Zr(IV)X_4$;
- $O{=}Ti(IV)X_2$ and $O{=}Zr(IV)X_{2)}$;
- $Ti(IV)X_2(OR^{13})_2$ and $Zr(IV)X_2(OR^{13})_2$;
- $Ti(IV)X_2(OAcAc)_2$ and $Zr(IV)X_2(OAcAc)_2$;
- $Ti(IV)(OSi(CH_3)_3)_4$ and $Zr(IV)(OSi(CH_3)_3)_4$;
- $(R^{13}O)_2Ti(IV)(OAcAc)_2$ and $(R^{13}O)_2Zr(IV)(OAcAc)_2$;
- alkali or earth alkali metal ions, optionally selected from the group consisting of Li, Na, K, Rb, Cs, Be, Mg, Ca, Sr, Ba, optionally Li, Na, K, Rb, optionally Li, Na, K;
- $O{=}Ti(IV)(OAcAc)_2$ and $O{=}Zr(IV)(OAcAc)_2$;
- $Ti(IV)(OAc)_4$ and $Zr(IV)(OAc)_4$;
- $Ti(IV)(OAc)_2(OR^{13})_2$ and $Zr(IV)(OAc)_2(OR^{13})_2$; and
- $O{=}Ti(IV)(OAc)_2$ and $O{=}Zr(IV)(OAc)_2$;

wherein $R^{13}$ is selected from the group consisting of $-CH_3$, $-CH_2CH_3$, $-CH(CH_3)_2$, $-CH_2CH_2CH_3$, $-C(CH_3)_3$, $-CH_2CH_2CH_2CH_3$ and $CH_2CH_2CH(CH_3)_2$ and wherein X is a halide, a pseudohalide, nitrate, chlorate or perchlorate anion, and

wherein the catalyst amount in each of steps (a) or (c) is optionally between 0.01 and 5 mol-%, optionally between 0.05 or 0.1 to 3 mol-%, based on the total molar silicon content present in said step.

In another aspect which may be combined with any of the embodiments or aspects preaddressed or still to be addressed unless in contradiction, the present invention is directed to a product obtained or obtainable by the method described herein. In another aspect which may be combined with any of the embodiments or aspects preaddressed or still to be addressed unless in contradiction, the present invention is directed to a 1K or 2K curable composition, optionally a water-based 1K or 2K curable composition, comprising the composition as described herein.

The 1K or 2K water-based composition can be, e.g., a surface coating composition, a water-based epoxy binder composition, a film former ingredient for example for water based sizings or finishings in glass fiber technology applications. Other application examples may include applications in water-based coatings and adhesives such as 2K water-based epoxy coatings or 1K polymer dispersion adhesives and coatings such as acrylate, SBR, latex, PVA and PU dispersions.

In another aspect which may be combined with any of the embodiments or aspects preaddressed or still to be addressed unless in contradiction, the present invention is directed to a blocked isocyanate formulation comprising a composition comprising a polymeric liquid polysiloxane material as described herein, comprising free isocyanate groups, wherein the formulation further comprises a blocking agent for isocyanates, optionally selected from the group consisting of diethyl malonate, sodium bisulfite, 3,5-dimethylpyrazole, methylethylketone oxime (MEKO), phenol and caprolactam, wherein a part or all of the isocyanate groups in the composition are reversibly blocked by chemical reaction with the blocking agent.

The blocking agent as described herein can be any protecting group for isocyanates known in the art, in particular a protecting group that can be removed by heating the composition beyond a specific blocking temperature which will remove the protecting group. In other words, the scope of the present claims also encompasses formulations, wherein the isocyanate groups are protected or blocked.

Formulations comprising blocked isocyanates according to the well-known state of the art in the polyurethane chemistry and products industry (e.g. adhesives and coatings) and isocyanate containing formulations within the scope of this invention shall account blocked isocyanate groups in much the same way as unreacted or "free" isocyanate groups when it comes to assessing the $R^5$ to isocyanate (-NCO) molar ratio. This is because according to the common logic, blocked isocyanates are labile at room temperature but do not form the final, thermodynamically stable product in the blocked state but only after deblocking and reaction with a suitable reaction partner such as a polyol, amine, or thiol compound a thermodynamically stable final state will be reached. Thus, blocked isocyanate groups retain their reactivity and chemical characteristics of an unblocked NCO group and thus shall be accounted as such herein.

In the following, the invention will be illustrated by reference to Figures which are not intended to limit the scope of the invention as described in the appended claims.

**FIGURES**

**Fig. 1** shows a $^{29}Si$ NMR spectrum of a pure Q-Type polysiloxane (containing no grafted T-type moieties) with $DP_Q$=1.99 and silanol moieties (shown as Q1, Q2 and Q3 Si-OH) amounting to approximately 6.5 mol%.

**Fig. 2** shows a $^{29}Si$ NMR spectrum of a $R^5$-unfunctionalized (i.e. $R^6$=H) ethyl silicate / APTMS polycondensate material with $n_{Q\text{-type}} : n_{T\text{-type}}$ = 1 : 0.15 as described in Example 1a and combined $Q^{2r}$-type and $Q^{3s,d}$-type siloxane ring species content of approximately 23%.

**Fig. 3** shows a $^{29}Si$ NMR spectrum of a $R^5$-unfunctionalized (i.e. $R^6$=H) D-50 / APTES polycondensate material with $n_{Q\text{-type}} : n_{T\text{-type}}$ = 1 : 0.20 as described in Example 1b with a combined $Q^{2r}$-type and $Q^{3s,d}$-type siloxane ring species content of approximately 15%.

**Fig. 4** shows a $^{29}Si$ NMR spectrum of a $R^5$-unfunctionalized (i.e. $R^6$=H) ethyl silicate / PAPTMS polycondensate material with $n_{Q\text{-type}} : n_{T\text{-type}}$ = 1 : 0.15 as described in Example 1d and a combined $Q^{2r}$-type and $Q^{3s,d}$-type siloxane ring species content of approximately 25%.

**EXAMPLES**

As used herein, $R^5$-unsubstituted and $R^5$-unfunctionalized means that $R^6$ is H.

Example 1 describes the preparation of various $R^5$-unsubstituted (i.e. $R^6$=H) polymeric liquid QT-polysiloxane materials which are then used to prepare isocyanate and epoxy derivatized materials and compositions.

Example 2 describes the preparation of epoxy and/or isocyanate derivatized materials and compositions.

Example 3 describes a comparative test highlighting the advantage of phenyl-amino $R^5$ bearing isocyanate compositions over their non-phenyl amine and mercapto counterparts in terms of stability.

**In all examples,** the mol-percentage of (tetrasiloxane) ring species refers to the sum of all $Q^2$ and $Q^3$ ring species relative to the total number of Q species also referred herein as %($Q^{2r}$&$Q^{3s,d}$) ring species unless specifically mentioned otherwise.

**Example 1a: synthesis of an $R^5$ - unfunctionalized ethylsilicate / APTMS polycondensate material with no-type : $n_{T\text{-type}}$ = 1 : 0.15**

625.0 g / 4.66 mol Si equivalent of a Q-type precursor with a DP_$Q_{type}$ of 1.99 and 39.8% ring species prepared by nonhydrolytic condensation of tetraethoxysilane (TEOS) with acetic anhydride in the presence of a Titanium(IV) isopropoxide rearrangement catalyst were placed inside a 1 L Pyrex glass bottle with cap and then 125.4 g / 0.70 mol of a monomeric T-type precursor 3-aminopropylrimethoxysilane (APTMS) was mixed in without further rearrangement catalyst addition. The flask was then capped and placed inside a heating cabinet set at 105°C and kept there for a period of 36 hours. Residual volatiles were removed by bubbling dry nitrogen through the product for a period of 24 hours at an elevated temperature of 60°C. $^{29}Si$ NMR analysis confirmed that the product contained less than 6.5% of $T^0$-monomer measured by the total amount of T-type moieties ($A(T^0)$ / $A(T^{total})$), as well as less than 24% of Q-type tetrasiloxane ring species.

**Example 1b: Synthesis of an $R^5$ - unfunctionalized D-50 / APTES polycondensate material with no-type : $n_{T\text{-type}}$ = 1 : 0.20**

855.0 g / 6.38 mol Si equivalent of a commercial ethylsilicate Q-type precursor "Dynasylan Silbond 50 (D-50)" (Evonik Industries) or equivalent was placed inside a 2 L glass reactor with refluxing column in an oil bath together with 282.5 g / 1.28 mol of a monomeric T-type precursor 3-aminopropyltriethoxysilane (APTES). The mixture was heated to a temperature of 120°C at which point a rearrangement catalyst tetrakis(trimethylsiloxy)titanium(IV) was added to the hot mixture. The mixture was kept stirring for a period of 18 hours. The reflux condenser was then replaced with a distillation bridge to remove the remaining volatiles through distillation. $^{29}Si$ NMR analysis confirmed that the product contained less than 11% $T^0$-monomer measured by the total amount of T-type moieties, as well as less than 16% of Q-type tetrasiloxane ring species.

**Example 1c: Synthesis of an $R^5$ - unfunctionalized ethylsilicate / BAPTMS polycondensate material with no-type : $n_{T\text{-type}}$ = 1 : 0.10**

The same procedure shown in the Example 1a was used with the difference that n-butylaminopropyltrimethoxysilane (BAPTMS) in the amount of 109.8g / 0.46 mol was used as the T-type precursor. The reaction temperature and time were adjusted to 105°C and 26 hours and Zr(IV)-acetoxyacetate was used as the rearrangement catalyst. $^{29}$Si NMR analysis confirmed that the product contained less than 15% $T^0$-monomer measured by the total amount of T-type moieties, as well as less than 23.5% of Q-type tetrasiloxane ring species.

**Example 1d: Synthesis of an $R^5$ - unfunctionalized ethylsilicate / PAPTMS polycondensate material with no-type : $n_{T\text{-type}}$ = 1 : 0.15**

The same procedure shown in the Example 1a was used with the difference that N-phenylaminopropyltrimethoxysilane (PAPTMS, commercially available as Silquest™ Y-9669, Momentive) in the amount of 178.7g / 0.70 mol was used as the T-type precursor. The reaction temperature and time were adjusted to 105°C and 24 hours. $^{29}$Si NMR analysis confirmed that the product contained less than 10% $T^0$-monomer measured by the total amount of T-type moieties, as well as less than 26% of Q-type tetrasiloxane ring species.

**Example 1e: Synthesis of an $R^5$ - unfunctionalized ethylsilicate / VBPEADITMS polycondensate material with no-type : $n_{T\text{-type}}$ = 1 : 0.08**

The same procedure shown in the Example 1a was used with the difference that N1-(Vinylbenzyl)-N2-(3-(trimethoxysilyl)propyl)-ethane-1,2-diamine hydrochloride (VBPEADITMS, commercially available as DOWSIL™ SZ 6032, Dow Inc.) was used as the T-type precursor. DOWSIL™ SZ 6032, which comprises 40% silane in methanol, was added in the amount of 349.83g (equivalent to 0.37 mol of the T-silane) to the Q-type precursor. The reaction temperature and time were adjusted to 105°C and 36 hours. $^{29}$Si NMR analysis confirmed that the product contained less than 9.8% $T^0$-monomer measured by the total amount of T-type moieties, as well as less than 21.6% of Q-type tetrasiloxane ring species.

**Example 1f: Synthesis of an $R^5$ - unfunctionalized ethylsilicate / BPEDATMS polycondensate material with no-type : $n_{T\text{-type}}$ = 1 : 0.18**

The same procedure shown in the Example 1a was used with the difference that N-benzyl-N'-[3-(trimethoxysilyl) propyl] ethylenediamine monohydrochloride (BPEDATMS, commercially available as Silquest™ A-1128, Momentive) was used as the T-type precursor. Silquest™ A-1128, which comprises 50% silane in methanol, was added in the amount of 585.9g (equivalent to 0.84 mol of the T-silane) to the Q-type precursor. The reaction temperature and time were adjusted to 105°C and 34 hours. $^{29}$Si NMR analysis confirmed that the product contained less than 14.5% $T^0$-monomer measured by the total amount of T-type moieties, as well as less than 22.6% of Q-type tetrasiloxane ring species.

**Example 1g: Synthesis of an $R^5$ - unfunctionalized TEOS / APTMS (+ moiety II, b = 2, $R^{1'}$ = Et, $R^4$ = Cl) polycondensate material with $n_{Q\text{-type}}$ : $n_{T\text{-type}}$ = 1 : 0.10**

**Substututed phenylsilane I**

The same procedure shown in the Example 1a was used with the difference that a T-silane with the following specifications: moiety II, b=2, $R^{1'}$= Et, $R^4$ = Cl described here was used as the T-type precursor and added in the amount of 214.63g / 0.47 mol to the Q-type precursor. The reaction temperature and time were adjusted to 105°C and 34 hours. $^{29}$Si NMR analysis confirmed that the product contained less than 9.4% $T^0$-monomer measured by the total amount of T-type moieties, as well as less than 20.6% of Q-type tetrasiloxane ring species.

**Example 1h: Synthesis of an $R^5$ - unfunctionalized ethylsilicate / APTMS (+ moiety II, b = 1, $R^{1'}$= H, $R^4$ = $NO_2$) polycondensate material with $n_{Q\text{-type}}$ : $n_{T\text{-type}}$ = 1 : 0.20**

**Susbtituted Phenylsilane II**

The same procedure shown in the Example 1a was used with the difference that a T-silane with the following specifications: moiety II, b = 1, $R^{1'}$= H, $R^4$ = $NO_2$ described here was used as the T-type precursor and added in the amount of 320.38g / 0.93 mol to the Q-type precursor. The reaction temperature and time were adjusted to 105°C and 30 hours. $^{29}$Si NMR analysis confirmed that the product contained less than 15% $T^0$-monomer measured by the total amount of T-type moieties, as well as less than 18.8% of Q-type tetrasiloxane ring species.

**Example 1i: Synthesis of an $R^5$ - unfunctionalized ethylsilicate / MPTMS polycondensate material with nQ-type : nT-type = 1 : 0.12**

The same procedure shown in the Example 1a was used with the difference that (3-Mercaptopropyl)trimethoxysilane (MPTMS, commercially available as Dynasylan® MTMO, Evonik Industries AG) in the amount of 109.81g / 0.56mol was used as the T-type precursor. The reaction temperature and time were adjusted to 100°C and 26 hours. $^{29}$Si NMR analysis confirmed that the product contained less than 9% T0-monomer measured by the total amount of T-type moieties, as well as less than 16.5% of Q-type tetrasiloxane ring species.

**Comparative Example 2a:**

50g of a material from example 1a was pre-heated to 60°C in a round bottom flask together with 130.05 g of pre-warmed (60°C) bisphenol A based epoxy resin (Araldite® LY556, Huntsman). Next, 1,8-Diazabicyclo[5.4.0]undec-7-ene (DBU) was added as a catalyst and the mixture was heated to 100°C with stirring. The initially opaque whitish mixture turned clear and homogeneous over the course of approximately 60 minutes at which point the heating was turned off and the mixture was allowed to cool to room temperature. The final product had an epoxy group to $R^5$ molar ratio of 6.5:1. When kept at room temperature / 50°C in a heating cabinet, the composition gelled after approximately 11 weeks / 20 days, respectively, indicating an insufficient shelf-life.

**Example 2a:**

A composition identical to the one given in comparative example 2a was prepared with the main difference that after following the above preparation step, to the final mixture an additional amount of 303.46 g of the same bisphenol A epoxy resin prewarmed to 60°C was added to the mixture. The resulting product was then stirred at 60°C for 5 minutes to ensure proper homogenization. The resulting composition had an epoxy group to $R^5$ molar ratio of 24.0:1 and was a slightly yellow, viscous liquid with a shelf life at room temperature of over 18 months with no noticeable viscosity increase. Even when stored in the heating cabinet, the product remained liquid after up to 6 months at 50°C, indicating good long-term stability of the product.

**Comparative Example 2b:**

1550g of a material produced according to a protocol identical to the one described in example 1c was placed inside a stirred 20l glass reactor and pre-heated to 95°C, at which point, 850g of a bisphenol A based epoxy resin (Epilox M 1052G, Leuna Harze, Germany) pre-heated to 95°C was added with stirring. The mixture was heated to 110°C with stirring and a tertiary amine base (dimethylphenylamine) was added as a catalyst. The reaction mixture was stirred for approximately 135 minutes at which point it had completely cleared up. The heating was turned off and the mixture allowed to cool to 70°C. The procedure yielded a slightly yellowish transparent resin with an epoxy to $R^5$ ratio of around 4.09 : 1 and a viscosity of around 1700-1900 mPa·s. Over time, however the viscosity of the mixture increased all the way to the point of gelation, indicating unsatisfactory shelf like of less than 4 months.

**Example 2b:**

The same protocol as in Comparative example 2b was employed to prepare this material, however at the end of the procedure, an additional amount of 2756g of the same Epilox M1052 G epoxy resin was added at the end of the reaction with stirring. The hot reaction mixture was then allowed to cool to room temperature, producing slightly yellowish transparent resin with an epoxy to $R^5$ ratio of around 20.57 : 1 and a viscosity around 1200-1400 mPa·s. Over time, however, the viscosity of the mixture did not longer increase considerably, and the composition when tested after 15 months displayed still the same viscosity and performance as when freshly prepared.

**Comparative Example 2c:**

A protocol identical to the one given in Comparative Example 2a was used with the difference, that as QT-polysiloxane, 50g of a material from Example 1d and 53.59g of bisphenol F based epoxy resin (Araldite GY282) were used. The material was prepared in such a way as to yield an epoxide to $R^5$ molar ratio of 6.2 : 1. The product was not stable, gelling after 12 days of accelerated aging storage conditions in a heating cabinet at 55°C.

**Example 2c:**

The above material from Comparative Example 2c was further diluted with 208.25g of Araldite GY282 epoxy resin at 55°C to yield an epoxide to $R^5$ molar ratio of 34.2 : 1. The product did not show any signs of aging or viscosity increase after 3 months of accelerated aging in a heating cabinet at 55°C.

**Comparative Example 2d:**

A protocol identical to the one given in Comparative Example 2b was used with the difference, that as QT-polysiloxane, a material from Example 1b and a novolac epoxy resin with a functionality of 2.5 (D.E.N. 425, Olin Corporation) were used. The material was prepared in such a way as to yield an epoxide to $R^5$ molar ratio of 6.6 : 1. The product showed poor storage stability, gelling after 8 days of accelerated aging storage conditions in a heating cabinet at 50°C and after 22 days when kept at room temperature.

**Example 2d:**

The above material from Comparative Example 2d was further diluted with D.E.N. 425 epoxy resin. The resulting composition had an epoxide to $R^5$ molar ratio of 40.8 : 1. The product did not show any signs of aging or viscosity increase after 3 months of accelerated aging in a heating cabinet at 50°C.

**Example 2e:**

A protocol identical to the one given in Comparative Example 2b was used with the difference, that as QT-polysiloxane, a material from Example 1h and an epoxidized vegetable oil epoxy resin (Lankroflex™ E2307 with EEW of 242 g/Eq, Valtris Specialty Chemicals) were used. The material was prepared in such a way as to yield an epoxide to $R^5$ molar ratio of 16.9 : 1. The composition was stable for more than 18 months and did not show any noticeable increase in viscosity after 7 weeks storage in a heating cabinet at 60°C.

**Comparative Example 2f:**

125g of a polysiloxane material from Example 1d pre-heated to 60°C is added to a round bottom flask under nitrogen together with 87.3 g of pre-heated (60°C) aliphatic polyisocyanate resin based on hexamethylene diisocyanate (HDI) commercially available as Desmodur® ultra N 3900 (Covestro). The mixture is heated to 60°C and stirred by means of an overhead stirrer for 30 min until the mixture turns clear. Next, 1.25g of a stabilizer was added to the mixture and the final product was collected. The composition is a viscous liquid with an isocyanate to $R^5$ ratio of approximately 3.48 : 1. When stored under ambient conditions, it has a shelf life of approximately 3-4 months, at which point the product gels. Gelation happens after about 3 weeks when kept at 50°C in a heating cabinet.

**Example 2f:**

A product just like the one in the comparative example 2f above was prepared with the main difference that a second portion of 145.2 g Desmodur® ultra N 3900 isocyanate (again pre-heated to 60°C) was added and the mixture was stirred at elevated temperature for another 20 minutes. The stabilizer was added at the end of the procedure (only one addition with a total amount of 1.25g). This composition is also a viscous liquid but with an isocyanate to $R^5$ ratio of approximately 10.94 : 1 but it had a shelf-life of over 12 months without gelation and did not show any signs of increased viscosity when stored in a heating cabinet for 4 months at 50°C.

**Comparative Example 2g:**

500g of a polysiloxane material from Example 1c was placed in a stirred glass reactor under inert gas atmosphere. Then, 450ml of water-free butyl acetate was added and the mixture was pre-heated to 55°C. Next, 260g of an aliphatic HDI polyisocyanate resin (Desmodur® ultra N 3900, Covestro) was preheated to 65°C and added over the course of 10 minutes from a heated round bottom reservoir vessel by means of a transfer capillary. The mixture was kept stirring at 60°C for roughly 45 min at which point it had turned clear. Next, 5.4g of a stabilizer was added to the mixture and the final product was collected. The composition is a viscous liquid with an $R^5$ to isocyanate ratio of approximately 3.58 : 1. When stored under ambient conditions, it has a shelf life of approximately 3-4 months, at which point the product gels. Gelation happens after about 3 weeks when kept at 50°C in a heating cabinet.

**Example 2g:**

A product just like the one in the comparative example 2g above was prepared with the main difference that a second portion of 423g Desmodur® ultra N 3900 isocyanate (again pre-heated to 60°C) was added and the mixture was stirred at elevated temperature for another 20 minutes. The stabilizer was added at the end of the procedure (only one addition with a total amount of 1.25g). The composition is a viscous liquid with an $R^5$ to isocyanate ratio of approximately 11.03 : 1 This composition had a shelf-life of over 12 months without gelation and did not show any signs of increased viscosity when stored in a heating cabinet for 4 months at 50°C.

**Example 2h:**

A product just like the one in the comparative example 2f above was prepared, with the main difference that a second portion of 58.1 g of a different isocyanate resin (Tolonate HDB-LV, Vencorex) was added. The composition is a slightly yellow viscous liquid with an isocyanate to $R^5$ ratio of approximately 6.3 : 1 and a shelf-life of around 15 months when kept at room temperature.

**Example 2i**

50 g of a material from Example 1d pre-heated to 60°C was placed inside a round bottom flask under Argon. 22.2 g of pre-heated (60°C) aromatic polyisocyanate based on diphenylmethane diisocyanate (MDI) commercially available as Desmodur® VL was then added at a constant rate over the course of 5 minutes. The mixture was then heated to 60°C under stirring for 30 min until the mixture turned clear. A second portion of Desmodur® VL pre-heated to 60°C (14.8 g) was added to the mixture. After 20 minutes of stirring at 60°C, 0.45 g of a stabilizer was added to the mixture. The final product is collected. The composition is a yellow viscous liquid with an isocyanate to $R^5$ ratio of approximately 5.4 : 1 and a shelf-life of around 8 months at which point the product gels. Gelation also happened within 2 months when kept at 50°C in a heating cabinet.

**Comparative example 2j:**

125g of a polysiloxane material from Example 1h was placed in a stirred glass vessel under inert gas atmosphere and the mixture was pre-heated to 55°C. Then, 460g of an aliphatic IPDI polyisocyanate resin (Desmodur® Z 4470 BA, Covestro) was preheated to 65°C and added over the course of 10 minutes from a heated round bottom reservoir vessel by means of a transfer capillary. The mixture was kept stirring at 60°C for roughly 40 min at which point it had turned clear. Next, 1.4g of a stabilizer was added to the mixture and the final product was collected. The composition is a light yellow viscous liquid with an isocyanate to $R^5$ ratio of approximately 4.18 : 1. When stored under ambient conditions, it has a shelf life of approximately 3-4 months, at which point the product gels. Gelation happens after about 3 weeks when kept at 50°C in a heating cabinet.

**Example 2j**

A product just like the one in the comparative example 2j was prepared with the main difference that a second portion of 600g Desmodur® Z 4470 BA isocyanate (again pre-heated to 60°C) was added and the mixture was stirred at elevated temperature for another 20 minutes. Then, the stabilizer was added at the end of the procedure (only one addition with a total amount of 1.4g). This material is a yellow viscous liquid with an isocyanate to $R^5$ ratio of approximately 10.94 : 1 and had a shelf-life of over 12 months without gelation and did not show any signs of increased viscosity when stored in a heating cabinet for 5 months at 50°C.

**Example 2k**

An isocyanate containing product was prepared using a polyethylyene oxide based hexymethylene diisocyanate (HDI) prepolymer. To this purpose, HDI was reacted in a 0.98:1 molar ratio with a polyethylene glycol diol with a molecular weight of roughly 1000g/mol (PEG-OH 1000) in the presence of a tin-based catalyst. The prepolymer was then reacted with a material from Example 1e in such a way that a isocyanate to $R^5$ ratio of approximately 7.1 : 1 was reached. To the final product, 0.3% of a stabilizer was added. The viscous liquid was a stable composition with good shelf life (> 16 months at room temperature) and good film-forming properties.

**Example 2l**

A material similar to the one described in Example 2k above was prepared with the key differences being the type of prepolymer and the blending ratio. As polyol, a commercial acrylic polyol with a molecular weight Mw = 2200 was used and the prepolymer was prepared using a mixture of 60 parts IPDI and 40 parts MDI by mass. The composition had a isocyanate to $R^5$ ratio of 8.2 : 1 and was a stable at room temperature / 50°C for more than 18 months / 4 months, respectively.

**Example 2m**

A material similar to the one described in Example 2k was prepared with the difference that the isocyanate prepolymer was based on a blended low-molecular weight polyol - prepolymer mixture. Said mixture was prepared by reacting a 36% by mass and 64% by mass mixture of glycerine and propylene glycol with a stoichiometric amount of toluene diisocyanate (TDI). Said prepolymer was then reacted with a material from Example 1g to reach a isocyanate to $R^5$ of 7.8 : 1. The product showed excellent shelf-life and stability as well as high crosslink reactivity when used in 2K PU adhesive formulations.

**Example 2n**

A material similar to the one described in Example 2k was prepared with the difference that a commercial polyester polyol was used to prepare the isocyanate prepolymer. The prepolymer was prepared from a Baycoll® AD 2055 commercial polyester polyol (Covestro) using a mixture of 60 parts IPDI and 40 parts MDI by mass. The composition had a isocyanate to $R^5$ ratio of 5.9 : 1 and was a stable at room temperature / 50°C for more than 18 months / 4 months, respectively.

**Example 2o**

A material similar to the one described in Example 2k was prepared with the difference that a custom-made polyester polyol was used to prepare the isocyanate prepolymer. The prepolymer was prepared from a polyester synthesized from ethylene glycol and a mixture of adipic anhydride and maleic anhydride which was then reacted with an MDI/TDI blend. The composition had a isocyanate to $R^5$ ratio of 9.2 : 1 and was a stable at room temperature without any noticeable change in viscosity over the course of more than 18 months.

**Example 2p**

A material identical to the one in Example 2f was prepared but with the difference that after the second addition of the Desmodur N3900 isocyanate addition step, an amount of a bisphenol A epoxy resin (BE188EL, Chang Chun Plastic) was added with continuing stirring the blend at temperature for an additional 20 minutes such that the resulting product had a isocyanate to $R^5$ ratio of approximately 10.94 : 1 and an epoxy to $R^5$ ratio of 4.4 : 1. The product was stable for over 14 months at room temperature without any noticeable change in viscosity.

**Example 2q**

A material identical to the one in Example 2e was prepared but with the difference that after complete epoxy resin addition, a portion of Desmodur N3200 isocyanate resin was also added with continuing stirring the blend at temperature for an additional 20 minutes. The resulting product had an epoxy to $R^5$ ratio of 16.9 : 1 and a isocyanate to $R^5$ ratio of approximately 2.2 : 1. The product was stable for over 14 months at room temperature without any noticeable change in viscosity.

**Example 2r:**

87g of a polysiloxane material from Example 1i was placed in a stirred glass reactor under inert gas atmosphere. Then, 74ml of water-free butyl acetate was added and the mixture was pre-heated to 55°C. Next, 68g of an aliphatic HDI polyisocyanate resin (Desmodur® ultra N 3900, Covestro) was preheated to 65°C and added over the course of 5 minutes from a heated round bottom reservoir vessel by means of a transfer capillary. The mixture was kept stirring at 60°C for roughly 25 min. A second portion of 53g Desmodur® ultra N 3900 isocyanate (again pre-heated to 60°C) was added into the mixture in the same way as the first portion of the isocyanate and the whole mixture was stirred at elevated temperature for another 25 minutes. Then, 0.8g of a stabilizer was added into the mixture and the final product was collected. The

composition is a viscous liquid with an $R^5$ to isocyanate ratio of approximately 9.21 : 1. When stored under ambient conditions, it has a shelf life of approximately 12 months without gelation and did not show any signs of increased viscosity when stored in a heating cabinet for 3 months at 50°C.

**Example 3**

This example describes several solvent-free isocyanate containing compositions obtained by blending various amino-and mercapto $R^5$ functional QT polysiloxanes with isocyanates in neat form and their reactivity / stability. As a quick screening test, an amount of a QT-polysiloxane was placed inside a round bottom flask which had previously been flame annealed to remove traces of water and purged with nitrogen. For each test, a QT-polysiloxane according to Examples 1a through 1h plus one additional QT-polysiloxane with mercaptopropyltrimethoxysilane (example 1i) as a grafted T-type silane (Test #9) was added to an amount of Desmodur N3300 isocyanate which had previously been warmed to 55°C under stirring. The amount of the isocyanate precursor was chosen individually for each test to result in an isocyanate to $R^5$ ratio of 7.2 : 1.

Table 1

| Test # | Example | T-type silane | M(T) (g/mol) | nT/nQ | Observation | Stable |
|---|---|---|---|---|---|---|
| 1 | 1a | APTMS | 179.29 | 0.15 | Instant gelation / solidification upon mixing | No |
| 2 | 1b | APTES | 221.37 | 0.2 | Instant gelation / solidification upon mixing | No |
| 3 | 1c | BAPTMS | 235.45 | 0.1 | Somewhat uniform reaction, product gels during reaction | No |
| 4 | 1d | PAPTMS | 255.39 | 0.15 | Uniform reaction, homogeneous liquid product | Yes |
| 5 | 1e | VBPEADITMS | 374.98 | 0.08 | Uniform reaction, homogeneous liquid product | Yes |
| 6 | 1f | BPEDATMS | 348.94 | 0.18 | Uniform reaction, homogeneous liquid product | Yes |
| 7 | 1g | Subst. Phenylsilane I | 460.16 | 0.1 | Uniform reaction, homogeneous liquid product | Yes |
| 8 | 1h | Subst. Phenylsilane II | 343.45 | 0.2 | Uniform reaction, homogeneous liquid product | Yes |
| 9 | 1i | MPTMS (-SH functional) | 196.34 | 0.12 | Uniform reaction, product gels soon after preparation | No |

In the summary Table 1 it can be seen that there is a clear trend in terms of product stability. All Phenyl-substituted amino-bearing $R^5$ compositions (tests # 4, 5, 6, 7 and 8) were stable whereas primary (tests # 1, 2) and secondary aliphatic amine-bearing $R^5$ compositions (test #3) as well as the mercaptopropyl-trimethoxysilane-bearing $R^5$ compositions (test #9) were not stable. This indicates that solvent-free long-term stable compositions comprising QT-polysiloxanes and isocyanates can be produced using phenylamino-functional QT-polysiloxanes, due to the improved stability.

## Claims

**1.** A composition comprising a polymeric liquid polysiloxane material comprising or consisting of:

(i) non-organofunctional Q-type siloxane moieties selected from the group consisting of:

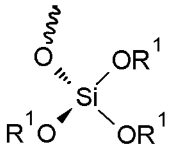 , 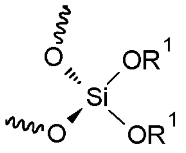 , 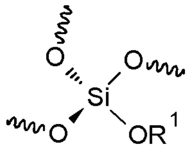 and 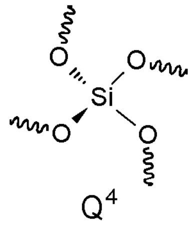 ;

Q1 Q2 Q3 Q4

(ii) mono-organofunctional T-type siloxane moieties selected from the group consisting of:

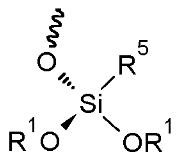 , 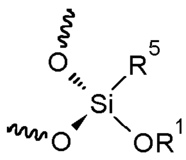 and 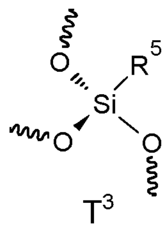 ;

T1 T2 T3

wherein

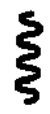 at Si-O 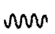 indicates a covalent siloxane bond to a silicon atom of another Q- and/or T-type moiety as defined in (i) and (ii);
**$R^1$** is selected from the group consisting of methyl, ethyl, propyl;
**$R^5$** is **L-Z,** wherein
**L** is an aliphatic linker with the formula $-(CH_2)_a-$;
**Z** is selected from the group consisting of **$-SR^6$**, **$-NHR^6$, $-N(R^6)_2$** and **$-NR^6R^7$,**

moiety (I):

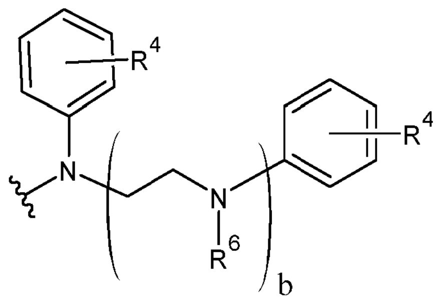 ,

moiety (II):

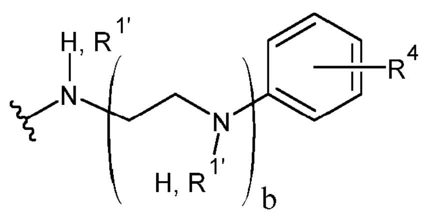 ,

wherein $R^4$ is H if b is 0, and
moiety (III):

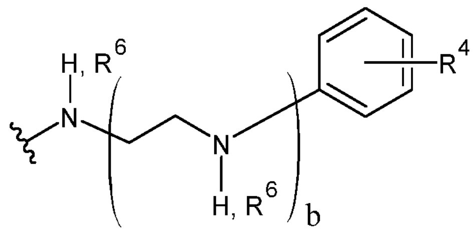,

wherein moiety (III) comprises least one $R^6$ residue;

wherein

**a** is an integer selected from the group consisting of 1, 2, 3, 4, 5, 6, 7 and 8,
**b** is an integer selected from the group consisting of 0, 1 and 2,
**$R^{1'}$** is selected from the group consisting of methyl, ethyl, propyl, butyl, pentyl and hexyl;
**$R^4$ is** a residue selected from the group consisting of -H, methyl, ethyl, $-CH=CH_2$, -F, -Cl, -Br, -I, -CN, -SCN, $-N_3$, -$NO_2$, $-SO_2OH$, $-SO_2OR^{1'}$ and $-C(=O)R^{1'}$, and
**$R^6$** is selected from the group consisting of:

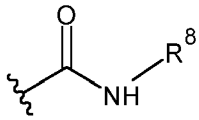, 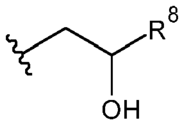, and 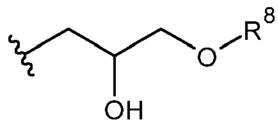;

**$R^7$** is selected from the group consisting of Me and - $(CH_2)_a-CH_3$;
**$R^8$** is

- an aliphatic, aromatic or unsaturated, substituted or non-substituted $C_{4-20}$ hydrocarbon, optionally a methylene diphenyl, and/or
- an aliphatic, aromatic or unsaturated, substituted or non-substituted residue selected from the group consisting of β-hydroxy ethers, β-hydroxy thioethers, β-hydroxy amines, oxazolidones, ureas, cyanurates, thio-ureas, urethanes and combinations thereof in polymeric or oligomeric form having a mass-average molecular weight of 100 to 20'000 g/mol, 150 to 15'000 g/mol, or 170 to 10'000 g/mol,

wherein $R^8$ comprises at least one moiety selected from the group consisting of an isocyanate and an epoxide, wherein
the degree of polymerization of the T-type alkoxy-terminated siloxane moieties of the material $DP_{T\text{-type}}$ is in the range of 1.1 to 2.7;
the degree of polymerization of the Q-type alkoxy-terminated moieties of the material $DP_{Q\text{-type}}$ is in the range of 1.4 to 2.8;
if the composition comprises isocyanate groups, the molar ratio of all $R^5$ residues to all isocyanate groups in the composition is 1 to at least 5, optionally 1 to at least 6;
if the composition comprises epoxide groups, the molar ratio of all $R^5$ residues to all epoxide groups in the composition is 1 to at least 10, optionally 1 to at least 17, optionally 1 to at least 25.

2. The composition according to claim 1, wherein the composition, optionally the polymeric liquid polysiloxane material, comprises at least 0.05 mmol/g, 0.1 mmol/g, 0.2 mmol/g, 0.5 mmol/g, or 1.0 mmol/g of isocyanate and/or epoxide groups on a total resins basis.

3. The composition according to claim 1 or 2, wherein Z is selected from the group consisting of $-SR^6$, $-NHR^6$, $-NR^6R^7$,

moiety (I):

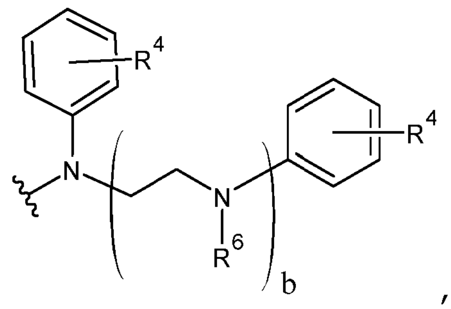

,

moiety (II):

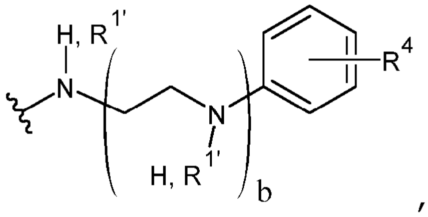

,

wherein $R^4$ is H or $CH=CH_2$, and
moiety (III):

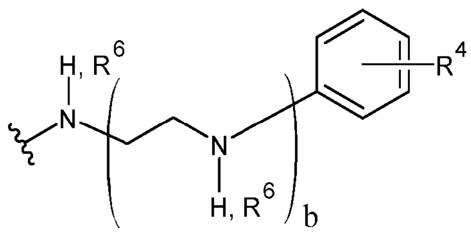

,

wherein moiety (III) comprises least one $R^6$ residue,
optionally wherein the composition or the polymeric liquid polysiloxane material comprises at least 0.1 mmol/g, optionally at least 0.2 mmol/g, optionally at least 0.35 mmol/g, optionally at least 0.5 mmol/g of isocyanate and/or epoxide groups on a total resins basis.

**4.** The composition according to any of claims 1 to 3, wherein
**$R^8$** is

- an aliphatic or aromatic, substituted or non-substituted $C_{4-20}$ hydrocarbon, and/or
- an aliphatic or aromatic, substituted or non-substituted residue selected from the group consisting of β-hydroxy ethers, β-hydroxy thioethers, β-hydroxy amines, ureas, cyanurates, thio-ureas, urethanes and combinations thereof in polymeric or oligomeric form having a mass-average molecular weight of 170 g/mol to 10'000 g/mol.

**5.** The composition according to any of claims 1 to 4, wherein **$R^4$** is H or $CH=CH_2$.

**6.** The composition according to any of claims 1 to 5, wherein for **Z** being **$-SR^6$** or **$-NHR^6$, $R^8$** is not a residue selected from the group consisting of:

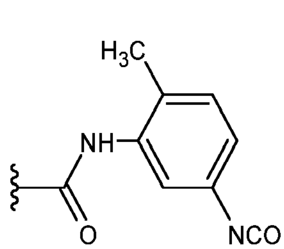

,

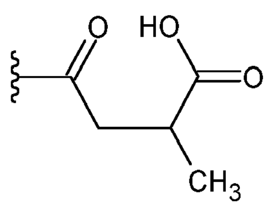

,

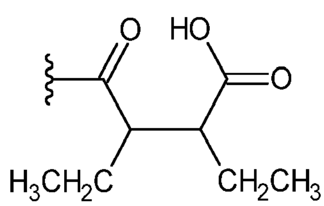

,

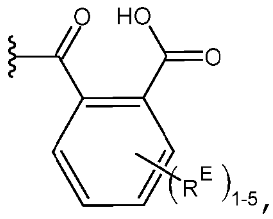

wherein $R^E$ is $C_{1-18}$ alkyl, $C_{2-18}$ alkenyl or $C_{2-18}$ alkynyl,

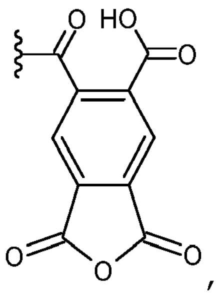

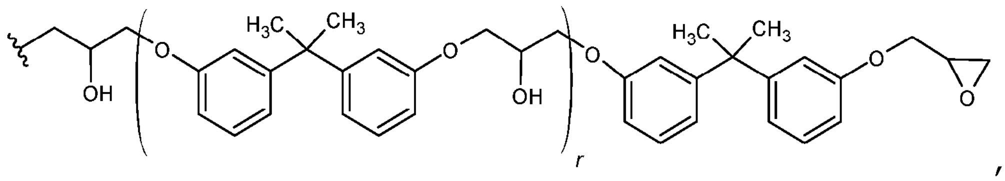

wherein r = 1 to 10,

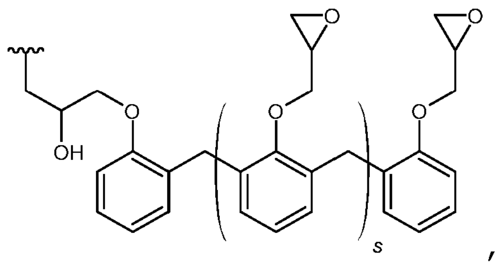

wherein s = 1 to 20,

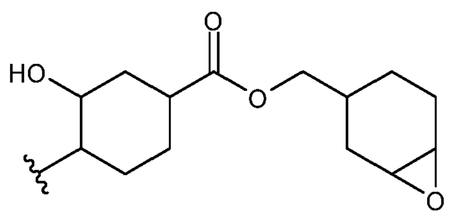

and

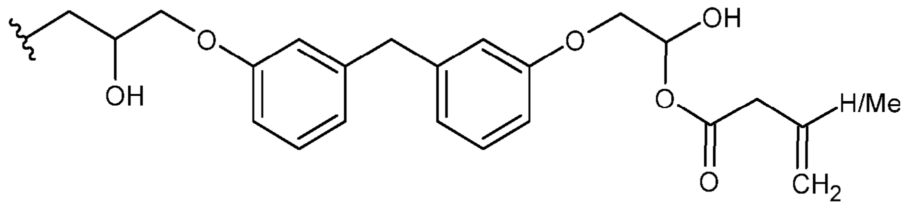.

7. The composition according to any of claims 1 to 6, wherein

**a** is 1, 2, 3 or 4, and/or
**b** is 0 or 1, and/or
**R$^{1'}$** is selected from the group consisting of methyl, ethyl, propyl and butyl;
**R$^4$** is selected from the group consisting of H or $CH=CH_2$, and/or
**Z** is selected from the group consisting of **-SR$^6$, -NHR$^6$, -NR$^6$R$^7$,**

moiety (II):

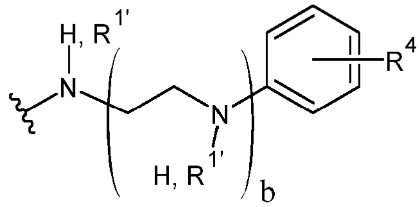,

and
moiety (III):

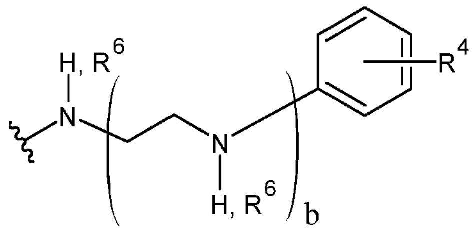,

wherein moiety (III) comprises least one R$^6$ residue.

8. The composition according to any of claims 1 to 7, wherein **R$^6$** comprises **R$^8$** that is selected from the group consisting of

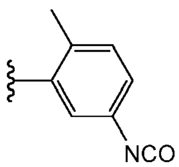, 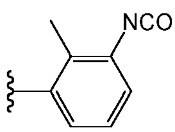, 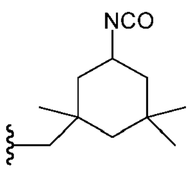, 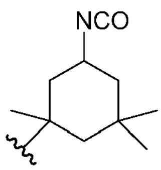, 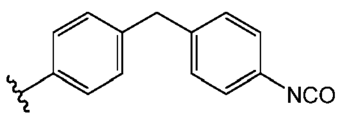,

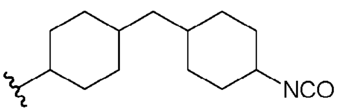, 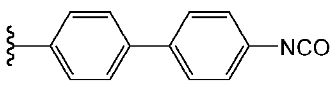, and 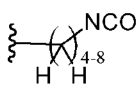,

in monomeric, biuret, uretdione and triisocyanurate form;

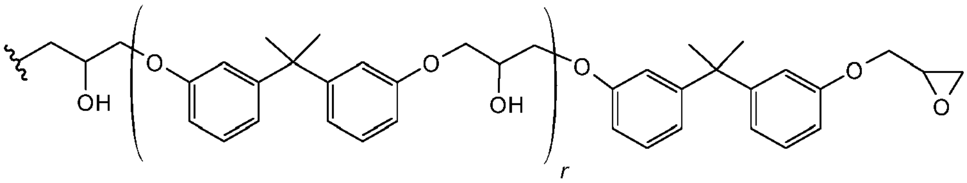

,

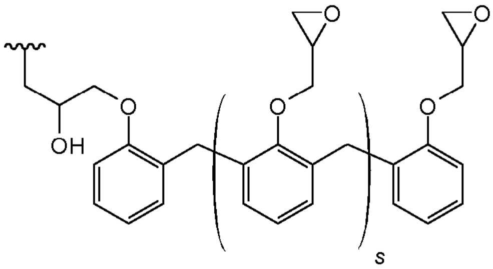

,

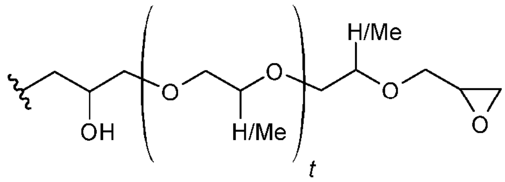

,

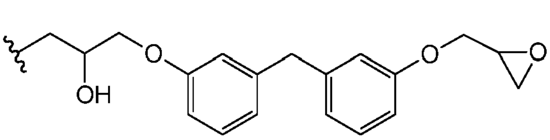

,

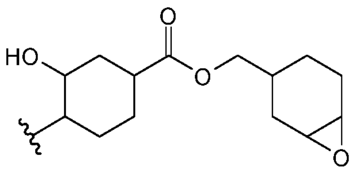

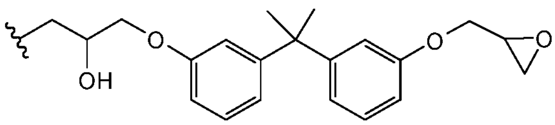

,

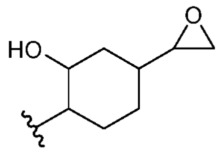

and

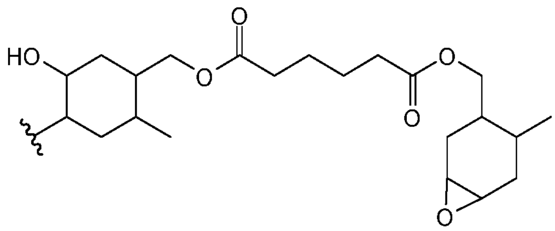

,

wherein **r** is an integer from 1 to 100, **s** is an integer from 1 to 15 and **t** is an integer from 1 to 10.

**9.** The composition according to any of claims 1 to 8, wherein the atomic ratio of T- to Q-species in the polymeric liquid polysiloxane material is in the range of 0.01:1 to 0.5:1, optionally in the range of 0.03:1 to 0.35:1.

**10.** The composition according to any of claims 1 to 9, wherein

- the degree of polymerization of the Q-type alkoxy-terminated moieties of the material $DP_{Q\text{-}type}$ is in the range of 1.6 to 2.4 and the atomic ratio of T- to Q-species in the material is in the range of 0.02:1 to 0.4:1; and/or
- the degree of polymerization of the T-type alkoxy-terminated siloxane moieties of the material $DP_{T\text{-}type}$ is in the range of 1.3 to 2.2.

**11.** A hydrolysis or emulsion product obtainable by reacting a composition according to any of claims 1 to 10 with

- a predetermined amount of water or with a predetermined amount of a water-solvent mixture, optionally in the presence of at least one surfactant for the hydrolysis product, or

- a predetermined amount of water, optionally in the presence of at least one surfactant for the emulsion product.

**12.** A method for preparing a composition comprising the polymeric liquid material according to one of claims 1 to 10, comprising the following steps:

(a) providing a Q-type polymethoxy, polyethoxy, polypropoxy or mixed poly(methoxy/ethoxy/propoxy) polysiloxane precursor,

optionally comprising

(a1) di-organofunctional D-type siloxane moieties; and/or
(a2) mono-organofunctional T-type siloxane moieties, optionally comprising less than 12 mol-% of (a1) and
(a2) combined relative to the total amount of all Q-type species;

optionally further comprising a rearrangement catalyst and/or tri-organofunctional M-type siloxane moieties; and
wherein degree of polymerization of the Q-type polysiloxane of the material $DP_{Q\text{-type}}$ is in the range of 1.5 to 2.5, optionally 1.6 to 2.4, optionally 1.65 to 2.35;

(b) adding at least one of a

(b1) tri-organofunctional M-type silane $Si(OR^1)(Me)_3$; and/or
(b2) di-organofunctional D-type silane $Si(OR^1)_2(R^2)(R^3)$, wherein

**$R^2$** is selected from methyl, vinyl and phenyl; and
**$R^3$** is selected from methyl, vinyl and phenyl; and/or

(b3) mono-organofunctional T-type silane $Si(OR^1)_3(R^5)$;
in mono- or oligomeric form to the polysiloxane of (a);

(c) optionally adding a rearrangement catalyst to the mixture of step (b);
(d) heating the mixture of (c), optionally in the absence of water;
(e) optionally repeating steps (b) to (d) at least once;
(f) retrieving, optionally isolating and optionally purifying the polymeric liquid material;
(g) mixing the material of step (e) or (f) with a compound or mixture of compounds in oligomeric or polymeric form, each compound comprising at least one isocyanate or epoxide group;
with the proviso that at least one of steps (a2) or (b3) is carried out, and
with the proviso that a rearrangement catalyst is present in at least one of steps (a) or (c).

**13.** A product obtained or obtainable by the method of claim 12.

**14.** A 1K or 2K curable composition, optionally a water-based 1K or 2K curable composition, comprising the composition according to any of claims 1 to 10.

**15.** A blocked isocyanate formulation comprising a composition according to any of claims 1 to 10 comprising isocyanate groups, wherein the formulation further comprises a blocking agent for isocyanates, optionally selected from the group consisting of diethyl malonate, sodium bisulfite, 3,5-dimethylpyrazole, methylethyl-ketone oxime (MEKO), phenol and caprolactam, wherein a part or all of the isocyanate groups in the composition are reversibly blocked by chemical reaction with the blocking agent.

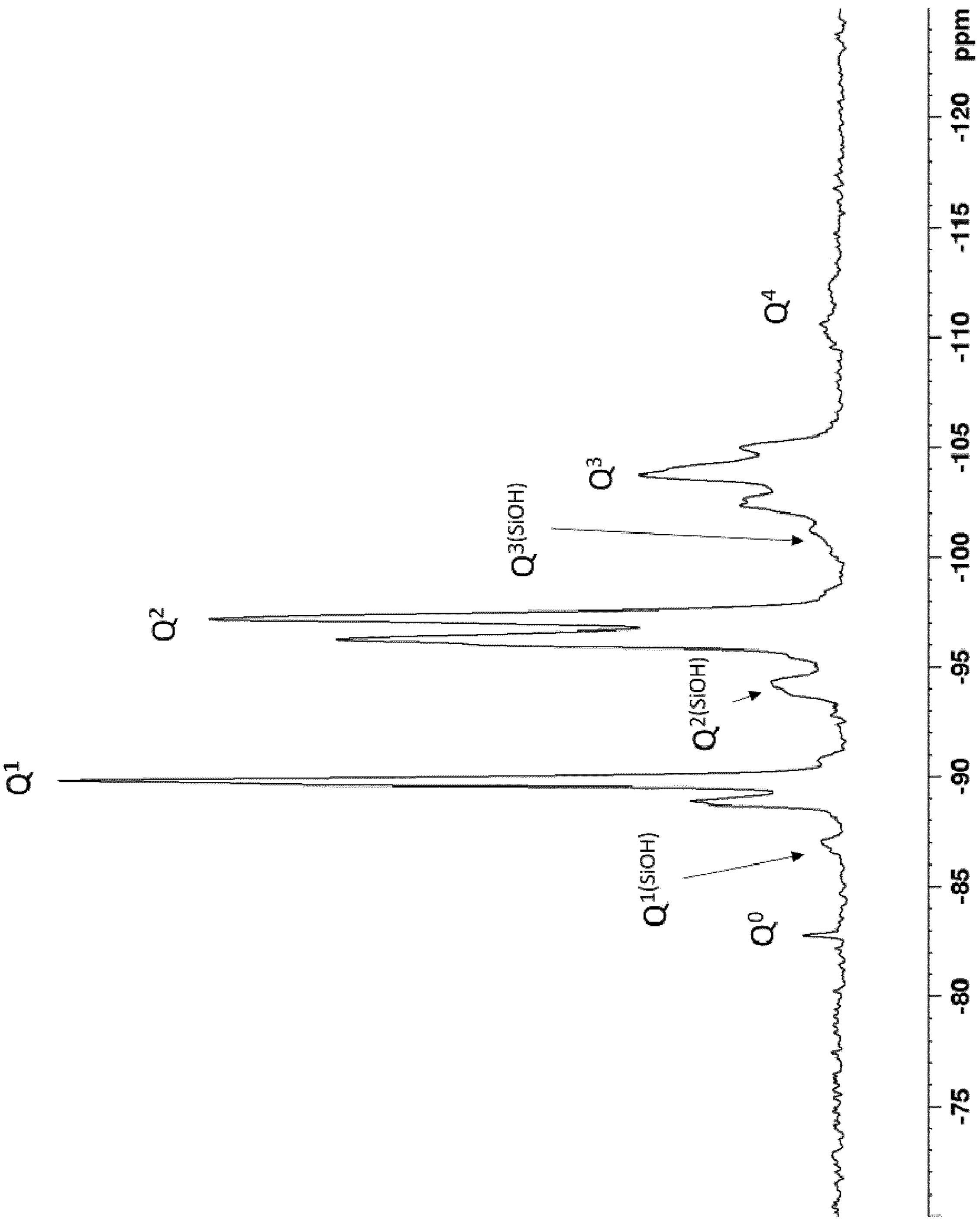
Q1
Q2
Q1(SiOH)
Q0
Q2(SiOH)
Q3(SiOH)
Q3
Q4
-75
-80
-85
-90
-95
-100
-105
-110
-115
-120
ppm

Fig. 1

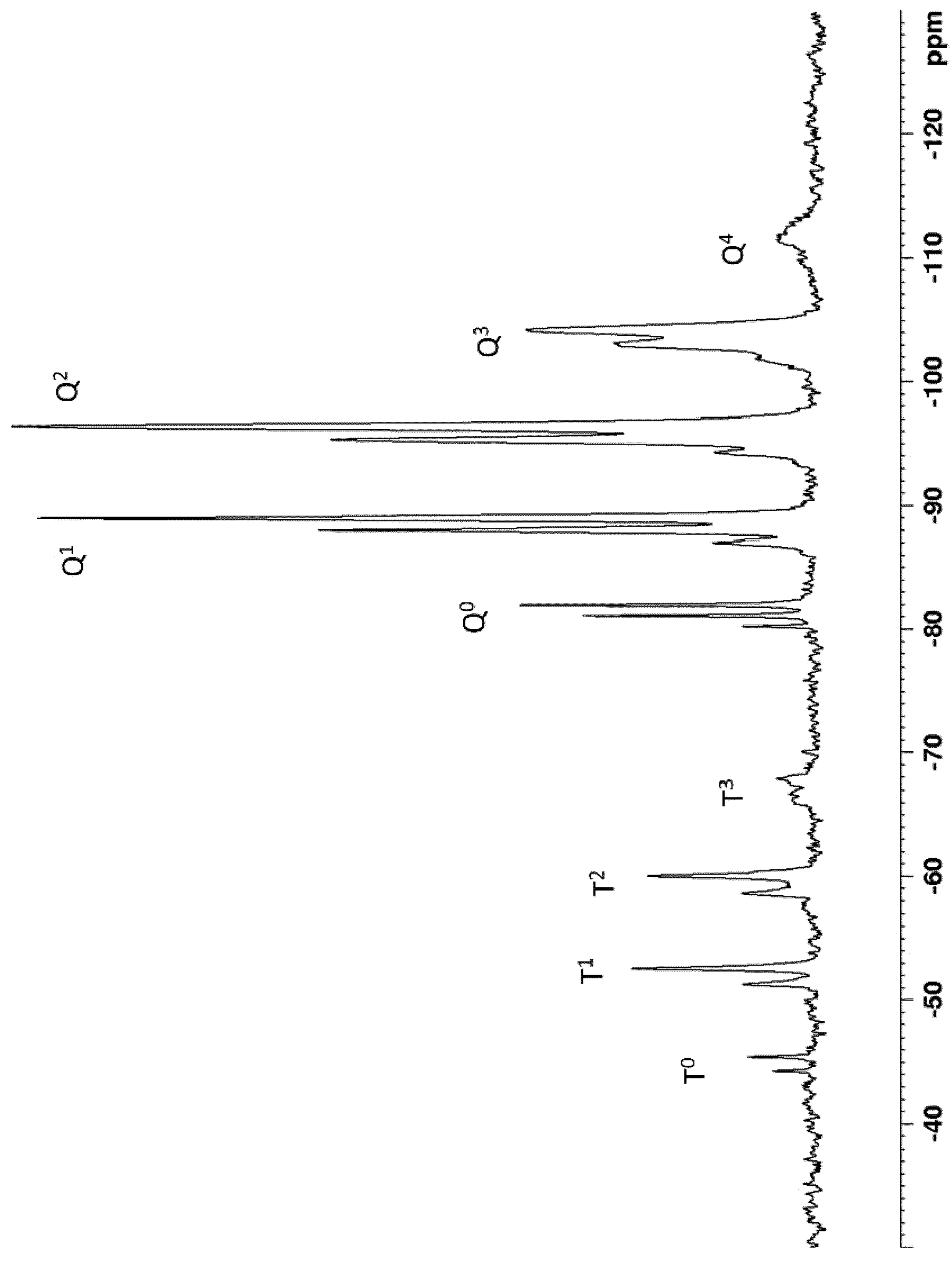


Fig. 2

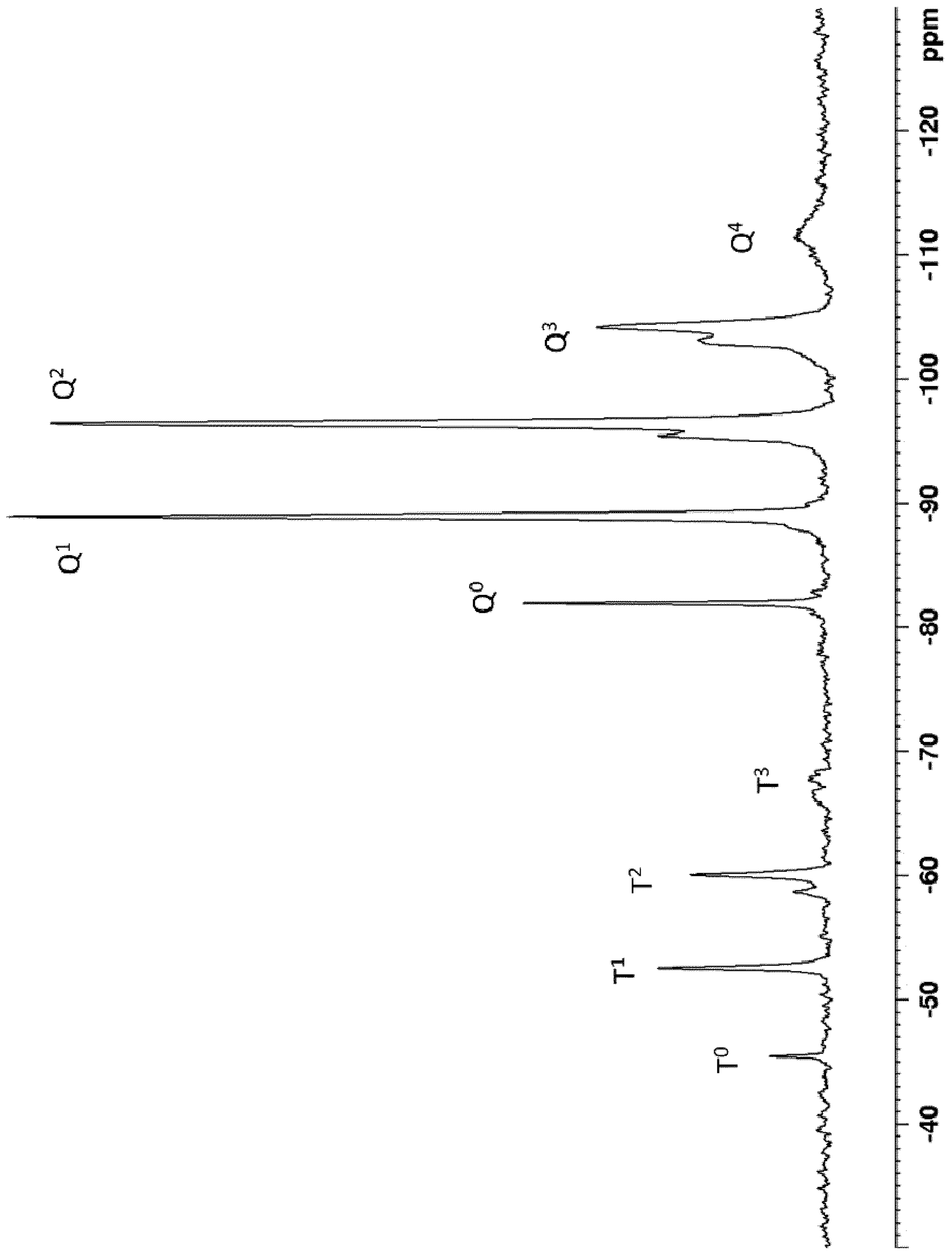


Fig. 3

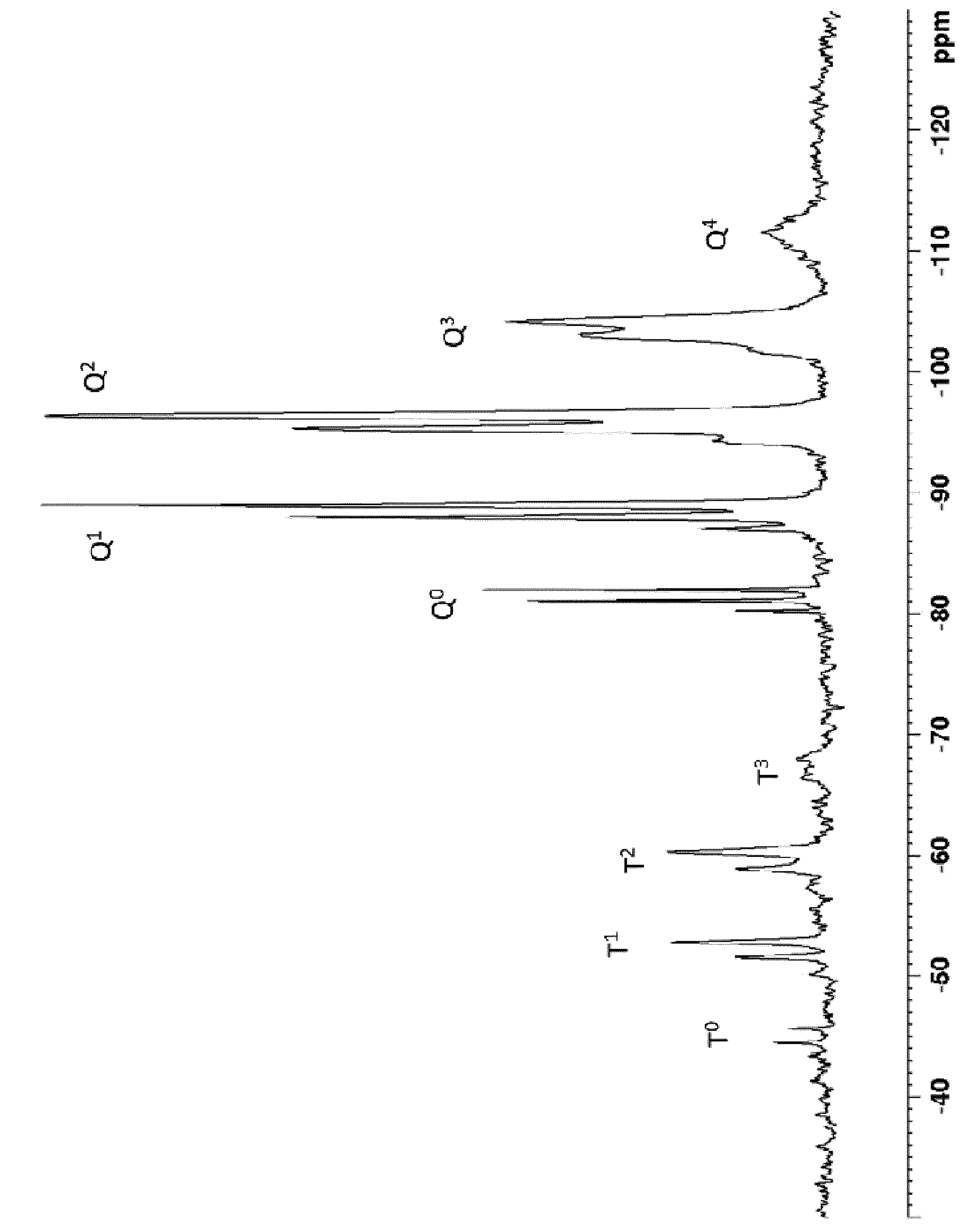


Fig. 4

Europäisches Patentamt
European Patent Office
Office européen des brevets

# EUROPEAN SEARCH REPORT

Application Number
EP 24 17 8465

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2022/263562 A1 (SILOXENE AG [CH]) 22 December 2022 (2022-12-22) * claims 1-12 * * paragraph [0067]; table 1 * ----- | 1-15 | INV. C08G77/14 C08G77/26 C08G77/28 |
| A | JP H07 18221 A (NIPPON CATALYTIC CHEM IND) 20 January 1995 (1995-01-20) * example 12 * * table 1 * * claims 1-4 * ----- | 1-15 | |

TECHNICAL FIELDS SEARCHED (IPC)
C08G

The present search report has been drawn up for all claims

1

| Place of search | Date of completion of the search | Examiner |
|---|---|---|
| The Hague | 21 October 2024 | Mensah, Laure |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
......................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 17 8465

This annex lists the patent family members relating to the patent documents cited in the above-mentioned European search report. The members are as contained in the European Patent Office EDP file on The European Patent Office is in no way liable for these particulars which are merely given for the purpose of information.

21-10-2024

| Patent document cited in search report | Publication date | Patent family member(s) | Publication date |
|---|---|---|---|
| WO 2022263562 A1 | 22-12-2022 | CN 117545794 A | 09-02-2024 |
| | | EP 4355810 A1 | 24-04-2024 |
| | | WO 2022263562 A1 | 22-12-2022 |
| JP H0718221 A | 20-01-1995 | JP 2742369 B2 | 22-04-1998 |
| | | JP H0718221 A | 20-01-1995 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019234062 A1
- WO 2022058059 A


### Non-patent literature cited in the description


- *Nanoscale*, 2010, vol. 2, 829-843
- *Nanoscale*, 2011, vol. 3, 5120-5125
- Standard Test Method for Calibration of Concentric Cylinder Rotational Viscometers. *ASTM E2975-15*
- *Macromolecules*, 2006, vol. 39 (5), 1701-1708